# EUROPEAN PATENT APPLICATION

(11) **EP 3 852 417 A1**
(43) Date of publication of application: **21.07.2021**
(21) Application number: 19870898.4
(22) Date of filing: 02.10.2019
(51) Int. Cl.: H04W 16/26, H04L 29/06, H04W 12/06, H04W 80/02, H04W 80/04, H04W 88/04, H04W 88/06

(54) **COMMUNICATION DEVICE, COMMUNICATION METHOD, PROGRAM, AND COMMUNICATION SYSTEM**

(30) Priority: 10.10.2018 JP 2018191571
(71) Applicant: Sony Corporation, 108-0075 Tokyo (JP)
(72) Inventor: KUSASHIMA, Naoki, Tokyo 108-0075 (JP); MIYAMOTO, Atsushi, Tokyo 108-0075 (JP); KIMURA, Ryota, Tokyo 108-0075 (JP)
(74) Representative: D Young & Co LLP
(86) International application number: PCT/JP2019/038904
(87) International publication number: WO 2020/075588

(57) **Abstract**

A communication device includes a first communication unit that performs wireless communication based on a first communication scheme; a second communication unit that performs communication based on a second communication scheme different from the first communication scheme; and a control unit that controls the communication based on the first communication scheme and the communication based on the second communication scheme, in which a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and the control unit converts one of data corresponding to the first layer and data corresponding to the second layer to the other.

## Description

### Field

The present disclosure relates to a communication device, a communication method, a program, and a communication system.

### Background

Wireless access schemes and wireless networks for cellular mobile communication (hereafter, also referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)", or "Further EUTRA (FEUTRA)") have been studied in the 3rd generation partnership project (3GPP). Note that, in the following description, LTE includes LTE-A, LTE-A Pro, and EUTRA, and NR includes NRAT and FEUTRA. A base station device (base station or communication device) is also referred to as an evolved NodeB (eNodeB) in LTE, a base station device (base station or communication device) is also referred to as a gNodeB in NR, and a terminal device (mobile station, mobile station device, terminal, or communication device) is also referred to as a user equipment (UE) in LTE and NR. LTE and NR are cellular communication systems in which a plurality of areas covered by base station devices are arranged in a cell shape. A single base station device may manage a plurality of cells.

As one of use cases of NR, the use in robot communication has been studied. As a specific example, it is assumed that wireless communication is used between devices inside a robot and outside the robot due to demands such as remote control and simplification of wiring. However, wireless is a limited resource, and there remains a problem that demands such as latency and reliability required for robot communication need to be satisfied. Under such situations, for example, an environment is assumed in which wireless communication is introduced in some communication networks and wired communication is applied to other communication networks. A study on the use of NR in robot communication is disclosed in Non Patent Literature 1.

Further, Patent Literature 1 discloses a technology in which a repeater is provided with two or more communication units of different wireless communication standards and a MAC address is appropriately switched between the communication units of the different communication standards to cause one communication device to virtually exist on a network of the other communication standard.

### Citation List

### Patent Literature

Patent Literature 1: JP 2014-207608 A

### Non Patent Literature

Non Patent Literature 1: 3GPP TR 22.804, V2.0.0 "3rd Generation Partnership Project; Technical Specification Group Services and System Aspects; Study on Communication for Automation in Vertical Domains (Release 16)," May, 2018.

### Summary

### Technical Problem

Meanwhile, when communication between a plurality of communication devices is relayed by another communication device (for example, a relay base station or a relay terminal), there is a case where communication based on a communication scheme (communication standard) different from those of other communication paths is applied to some communication paths among communication paths between the plurality of communication devices. Under such situations, there is a case where, for example, communication control independently of the other communication paths is performed for some communication paths among a series of communication paths between the plurality of communication devices, and it is difficult to maintain end-to-end quality of service (for example, QoS).

Therefore, the present disclosure proposes a technology that enables end-to-end communication to be realized in a more preferable manner even in a situation where a plurality of communications having different communication schemes are applied in communication between a plurality of communication devices.

### Solution to Problem

According to the present disclosure, a communication device is provided that includes: a first communication unit that performs wireless communication based on a first communication scheme; a second communication unit that performs communication based on a second communication scheme different from the first communication scheme; and a control unit that controls the communication based on the first communication scheme and the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and the control unit converts one of data corresponding to the first layer and data corresponding to the second layer to the other.

According to the present disclosure, a communication method, executed by a computer, is provided that includes: performing wireless communication based on a first communication scheme; performing communication based on a second communication scheme different from the first communication scheme; and controlling the communication based on the first communication scheme and the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and one of data corresponding to the first layer and data corresponding to the second layer is converted to the other.

According to the present disclosure, a program is provided that causes a computer to execute: performing wireless communication based on a first communication scheme; performing communication based on a second communication scheme different from the first communication scheme; and controlling the communication based on the first communication scheme and the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and one of data corresponding to the first layer and data corresponding to the second layer is converted to the other.

According to the present disclosure, a communication system is provided that includes: a first communication device; a second communication device; and a third communication device that relays communication between the first communication device and the second communication device, wherein the third communication device includes: a first communication unit that performs wireless communication with the first communication device based on a first communication scheme; a second communication unit that performs communication with the second communication device based on a second communication scheme different from the first communication scheme; and a control unit that controls the communication based on the first communication scheme and the communication based on the second communication scheme, a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and the control unit converts one of data corresponding to the first layer and data corresponding to the second layer to the other.

According to the present disclosure, a communication device is provided that includes: a communication unit that performs communication with another communication device, which relays data transmitted from a base station based on a first communication scheme, based on a second communication scheme different from the first communication scheme; and a control unit that controls the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and the control unit performs control such that at least any of a process corresponding to a communication protocol of a layer higher than the first layer among processes according to encoding of transmitted data based on the first communication scheme and a process corresponding to a communication protocol of a layer higher than the first layer among processes according to decoding of received data based on the first communication scheme is applied as a process corresponding to a communication protocol of a layer higher than the second layer.

According to the present disclosure, a communication method, executed by a computer, is provided that includes: performing communication with another communication device, which relays data transmitted from a base station based on a first communication scheme, based on a second communication scheme different from the first communication scheme; and controlling the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and control is performed such that at least any of a process corresponding to a communication protocol of a layer higher than the first layer among processes according to encoding of transmitted data based on the first communication scheme and a process corresponding to a communication protocol of a layer higher than the first layer among processes according to decoding of received data based on the first communication scheme is applied as a process corresponding to a communication protocol of a layer higher than the second layer.

According to the present disclosure, a program is provided that causes a computer to execute: performing communication with another communication device, which relays data transmitted from a base station based on a first communication scheme, based on a second communication scheme different from the first communication scheme; and controlling the communication based on the second communication scheme, wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and control is performed such that at least any of a process corresponding to a communication protocol of a layer higher than the first layer among processes according to encoding of transmitted data based on the first communication scheme and a process corresponding to a communication protocol of a layer higher than the first layer among processes according to decoding of received data based on the first communication scheme is applied as a process corresponding to a communication protocol of a layer higher than the second layer.

### Advantageous Effects of Invention

As described above, according to the present disclosure, provided is the technology that enables the end-to-end communication to be realized in a more preferable manner even in the situation where the plurality of communications having different communication schemes are applied in the communication between the plurality of communication devices.

Note that the above-described effect is not necessarily limited, and any effect illustrated in the present specification or other effects that can be grasped from the present specification may be exhibited in addition to the above-described effect or instead of the above-described effect.

### Brief Description of Drawings

FIG. 1 is an explanatory diagram for describing an example of a schematic configuration of a system 1 according to an embodiment of the present disclosure.
FIG. 2 is an explanatory diagram for describing an outline of an example of relay communication.
FIG. 3 is an explanatory diagram for describing an outline of an example of relay communication in the system according to the embodiment.
FIG. 4 is an explanatory diagram for describing an outline of another example of the relay communication in the system according to the embodiment.
FIG. 5 is a diagram illustrating an example of a configuration of a frame of Ethernet.
FIG. 6 is a diagram illustrating an example of a protocol stack of data communication in NR.
FIG. 7 is a diagram illustrating an example of data flow in Layer 2 of NR.
FIG. 8 is a diagram illustrating an example of a protocol stack of control information communication in NR.
FIG. 9 is a diagram illustrating an example of a protocol stack of data communication in relay communication in which wireless communication and wired communication are combined.
FIG. 10 is an explanatory diagram for describing an outline of an example of latency in relay communication in which communications having different communication schemes are combined.
FIG. 11 is a block diagram illustrating an example of a configuration of a base station according to the embodiment.
FIG. 12 is a block diagram illustrating an example of a configuration of a terminal device according to the embodiment.
FIG. 13 is a block diagram illustrating an example of a configuration of a communication device according to the embodiment.
FIG. 14 is an explanatory diagram for describing an example of a protocol stack in the system according to the embodiment.
FIG. 15 is an explanatory diagram for describing another example of the protocol stack in the system according to the embodiment.
FIG. 16 is an explanatory diagram for describing still another example of the protocol stack in the system according to the embodiment.
FIG. 17 is an explanatory diagram for describing still another example of the protocol stack in the system according to the embodiment.
FIG. 18 is a diagram illustrating an example of a protocol stack of control signal communication in the system according to the embodiment.
FIG. 19 is a sequence diagram illustrating an example of flow of a series of processes of RRC settings and relay communication in the system according to the embodiment.
FIG. 20 is an explanatory diagram for describing an example of an initial connection sequence of a wired terminal connected to a core network via a wired communication path.
FIG. 21 is an explanatory diagram for describing an outline of an example of latency in the relay communication according to the embodiment.
FIG. 22 is a flowchart illustrating an example of processing flow for controlling a layer that performs protocol conversion based on header information.
FIG. 23 is an explanatory diagram for describing an example of a schematic configuration when a plurality of times of relay are performed.
FIG. 24 is an explanatory diagram for describing an example of a data communication protocol stack according to the embodiment.
FIG. 25 is an explanatory diagram for describing another example of the data communication protocol stack according to the embodiment.
FIG. 26 is a block diagram illustrating a first example of a schematic configuration of an eNB.
FIG. 27 is a block diagram illustrating a second example of the schematic configuration of the eNB.
FIG. 28 is a block diagram illustrating an example of a schematic configuration of a smartphone.
FIG. 29 is a block diagram illustrating an example of a schematic configuration of a car navigation device.

### Description of Embodiments

Hereinafter, preferred embodiments of the present disclosure will be described in detail with reference to the accompanying drawings. Note that constituent elements having substantially the same functional configuration in the present specification and the drawings will be denoted by the same reference sign, and the redundant description thereof will be omitted.

Note that the description will be given in the following order.
1. Introduction
1.1. Example of System Configuration
1.2. Requirements for Robot Communication
1.3. Types of Information of Robot Communication
1.4. Relay Communication
1.5. Protocol Stack
2. Study on Relay Communication in which Communications Having Different Communication Schemes Are Combined
2.1. Example of Protocol Stack of Relay Communication in which Wireless Communication and Wired Communication Are Combined
2.2. Technical Problems Related to Relay Communication in which Wireless Communication and Wired Communication Are Combined
3. Technical Features
3.1. Configuration Examples
3.1.1. Configuration Example of Base Station
3.1.2. Configuration Example of Terminal Device
3.1.3. Configuration Example of Communication Device
3.2. Control Example of Relay Communication
4. Application Examples
4.1. Application Examples Related to Base Station
4.2. Application Examples Related to Terminal Device
5. Conclusion

### <<1. Introduction>>

### <1.1. Example of system configuration>

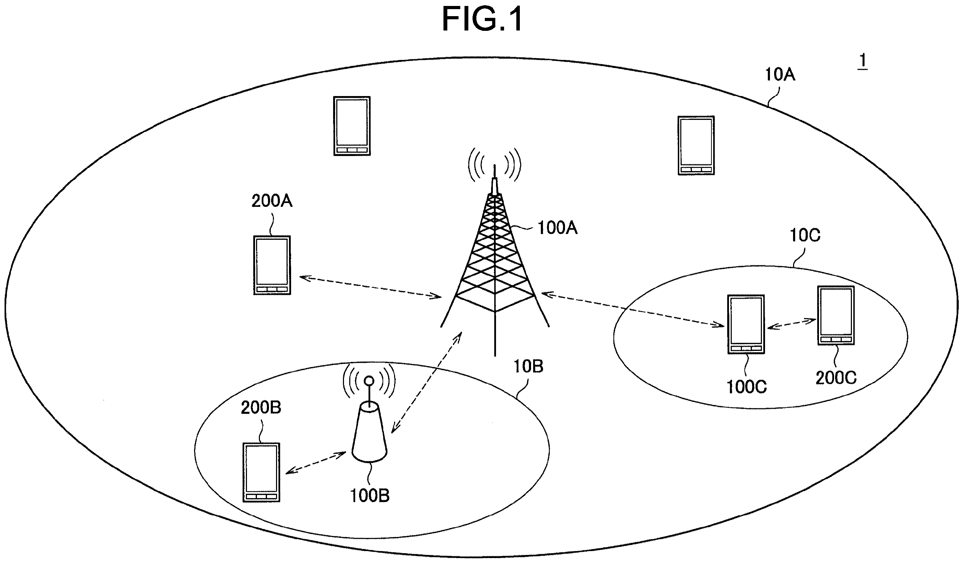

First, an example of a schematic configuration of a system 1 according to an embodiment of the present disclosure will be described with reference to FIG. 1. FIG. 1 is an explanatory diagram for describing the example of the schematic configuration of the system 1 according to the embodiment of the present disclosure. As illustrated in FIG. 1, the system 1 includes a wireless communication device 100 and a terminal device 200. Here, the terminal device 200 is also referred to as a user. The user can also be referred to as a UE. The wireless communication device 100C is also referred to as a UE-Relay. The UE herein may be a UE defined in LTE or LTE-A, and the UE-Relay may be a prose UE to network relay discussed in 3GPP, or may more generally mean a communication device.

### (1) Wireless Communication Device 100

The wireless communication device 100 is a device that provides a wireless communication service to a subordinate device. For example, a wireless communication device 100A is a base station of a cellular system (or mobile communication system). The base station 100A performs wireless communication with a device (for example, terminal device 200A) located inside a cell 10A of the base station 100A. For example, the base station 100A transmits a downlink signal to the terminal device 200A and receives an uplink signal from the terminal device 200A.

The base station 100A is logically connected to another base station by, for example, an X2 interface, and can transmit and receive control information and the like. Further, the base station 100A is logically connected to a so-called core network (not illustrated) by, for example, an S1 interface, and can transmit and receive the control information and the like. Note that communication between these devices can be physically relayed by various devices.

Here, the wireless communication device 100A illustrated in FIG. 1 is a macro cell base station, and the cell 10A is a macro cell. On the other hand, wireless communication devices 100B and 100C are master devices that operate small cells 10B and 10C, respectively. As an example, the master device 100B is a fixedly installed small cell base station. The small cell base station 100B establishes a wireless backhaul link with the macro cell base station 100A and an access link with one or more terminal devices (for example, terminal device 200B) inside the small cell 10B. Note that the wireless communication device 100B may be a relay node defined by 3GPP. The master device 100C is a dynamic AP (access point). The dynamic AP 100C is a mobile device that dynamically operates the small cell 10C. The dynamic AP 100C establishes a wireless backhaul link with the macro cell base station 100A and an access link with one or more terminal devices (for example, terminal device 200C) inside the small cell 10C. The dynamic AP 100C may be, for example, a terminal device equipped with hardware or software capable of operating as a base station or a wireless access point. The small cell 10C in this case is a dynamically formed localized network/virtual cell.

The cell 10A may be operated according to, for example, any wireless communication scheme such as LTE, LTE-A (LTE-Advanced), LTE-ADVANCED PRO, GSM (registered trademark), UMTS, W-CDMA, CDMA200, WiMAX, WiMAX2, and IEEE802.16.

Note that the small cell is a concept that can include various types of cells smaller than a macro cell (for example, femtocells, nano cells, pico cells, and micro cells) arranged so as to overlap or not overlap with the macro cell. In one example, the small cell is operated by a dedicated base station. In another example, the small cell is operated as a terminal serving as a master device temporarily operates as a small cell base station.
Further, a so-called relay node can also be considered as a form of the small cell base station. A wireless communication device that functions as a master station of a relay node is also referred to as a donor base station. The donor base station may mean a DeNB in LTE, or more generally mean a master station of a relay node.

### (2) Terminal Device 200

The terminal device 200 can communicate in a cellular system (or mobile communication system). The terminal device 200 performs wireless communication with the wireless communication device (for example, base station 100A or master device 100B or 100C) of the cellular system. For example, the terminal device 200A receives a downlink signal from the base station 100A and transmits an uplink signal to the base station 100A.

Further, the terminal device 200 is not limited to a so-called UE, and a so-called low cost terminal (low cost UE) such as an MTC terminal, an enhanced MTC (eMTC) terminal, and an NB-IoT terminal may be applied.

### (3) Supplement

Although the schematic configuration of the system 1 has been illustrated as above, the present technology is not limited to the example illustrated in FIG. 1. For example, as the configuration of the system 1, a configuration that does not include a master device, small cell enhancement (SCE), a heterogeneous network (HetNet), an MTC network, or the like can be adopted. Further, as another example of the configuration of the system 1, a master device may be connected to a small cell and a cell may be constructed as a subordinate of the small cell.

Further, the system according to the embodiment of the present disclosure may include a communication device (hereinafter, also referred to as "communication device 300" for convenience) configured to be capable of communicating with the terminal device 200 via a wired or wireless communication path although details will be described later. In this case, for example, the terminal device 200 may serve as a so-called relay communication device that relays communication between the base station 100 and the communication device 300. Further, at this time, communications having different communication schemes may be applied to the communication between the base station 100 and the terminal device 200 and the communication between the terminal device 200 and the communication device 300.

### <1.2. Requirements for Robot Communication>

Next, requirements for communication in the case of applying NR to control of a robot or the like will be outlined. As one of use cases of NR, the use in the robot via communication has been studied. As a specific example, the followings are examples of use cases in which wireless communication is applied to the robot, a sensor, and the like.
- Remote surgery using a surgery support robot
- Automatic control and remote control of a train, an automobile, a drone, or the like (that is, a moving object)
- Factory automation and building automation
- Communication between devices inside a robot

In communication assuming the use of the robot (hereinafter, also referred to as "robot communication"), low latency with a round-trip delay of 1 millisecond or less in a physical layer, ultra-reliability which achieves a packet error rate of 0.001% or less, high communication service availability, which enables communication at all times when an application desires to perform communication, and the like are required.

Conventionally, in order to satisfy these high requirements, communication via a high-speed and highly reliable wired communication path has been applied to communication assuming the use of the robot. The communication via the wired communication path is resistant to interference from others and it is easy to realize highly reliable communication since propagation environments inside a line and outside the line can be separated by a cable. However, mobility and movable area may be limited since devices that communicate with each other are connected via the wired communication path. Further, a situation in which wiring cost increases is also assumed, and there is a case where it is difficult to avoid a weight increase due to the wiring.

In order to satisfy the above high requirements, low-latency and high-reliability technologies such as data duplication and a low-latency slot have been introduced in NR and LTE. As a specific example, it is possible to realize highly reliable wireless communication by making data redundant using a large amount of radio resources. However, the radio resources such as frequency bands are limited, and thus, there is a case where it is difficult to realize low-latency and high-reliability wireless communication on all paths.

In view of the above situation, wireless-wire combined relay communication in which wired communication is applied in some communication paths and wireless communication is applied in other communication paths is assumed as an example of a typical configuration in one embodiment of the present disclosure. As a result, it is possible to construct a communication system that takes advantages of both the wired communication and the wireless communication.

### <1.3. Types of Information of Robot Communication>

In the robot communication according to the embodiment of the present disclosure, reception and transmission of various types of information can be assumed. Examples of information received and transmitted by robot communication can be classified into, for example, information that requires real-timeliness and information that does not necessarily require real-timeliness. The information that requires real-timeliness includes, for example, information that guarantees QoS. Further, examples of the information that does not necessarily require the real-timeliness can include information that does not necessarily guarantee QoS.

Examples of types of the information that require real-timeliness are given as follows.
- Motion information directly related to motion (for example, control information for an actuator and the like)
- Sensor information
- Control information when an emergency state occurs (for example, when a collision risk occurs)
- Information that can be thought of in the human cerebellum
- Sensor information measured in the vicinity of an operating robot

Examples of types of the information that does not necessarily require real-timeliness are given as follows.
- Log data (for example, a trajectory of a joint angle of a robot, error information, an event (when the event occurs at a certain time), past sensor information, or the like)
- Information exchange at the time of initialization (information at a planning stage)
- Information at the time of connection set-up
- Information on a movement plan
- Information that can be thought of in the human cerebrum
- Sensor information measured at a position farther away from the operating robot

### <1.4. Relay Communication>

Next, relay communication will be outlined. In a wireless communication system, for example, a relay is sometimes adopted for the purpose of expanding cell coverage, improving the quality of a reception signal, and the like.

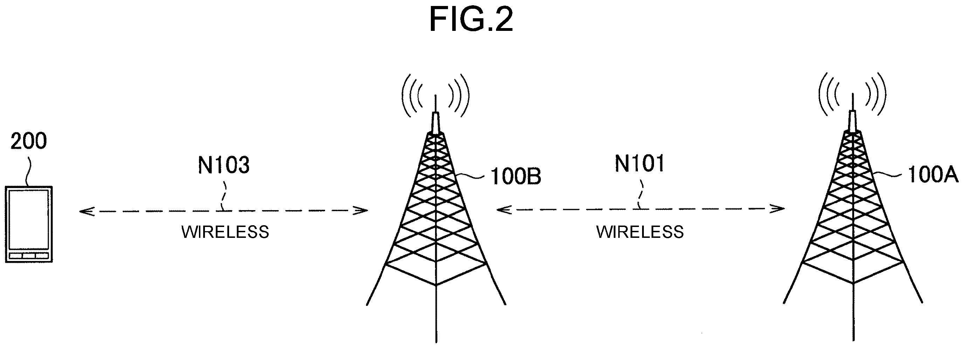

Here, an example of the relay communication in conventional wireless communication will be described with reference to FIG. 2. FIG. 2 is an explanatory diagram for describing the outline of the example of the relay communication. In the example illustrated in FIG. 2, communication between the base station 100A and the terminal device 200 is performed via the relay base station 100B. Further, in the example illustrated in FIG. 2, communication is performed between the base station 100A and the relay base station 100B via a wireless communication path, and communication is also performed between the relay base station 100A and the terminal device 200 via a wireless communication path. As a result, it is possible to deliver a signal to the terminal device 200 with good quality, for example, even when it is difficult for the terminal device 200 to directly receive the signal from the base station 100 due to the influence of propagation loss or the like.

### (Wireless-Wire Combined Relay Communication)

Next, as an example of relay communication, relay communication in a case where communication via a wireless communication path (hereinafter, also simply referred to as "wireless communication") and communication via a wired communication path (hereinafter, also simply referred to as "wired communication") are combined will be outlined.

In the system according to the embodiment of the present disclosure, for example, relay communication (hereinafter, also referred to as "wireless-wired relay communication") in which a wired communication path is applied in a partial section of a series of communication paths is assumed for the conventional relay communication in wireless communication.

An example of operations of the wireless-wired relay communication that can be assumed in the system according to the present embodiment is an operation in which wireless communication is used for long-distance transmission. Specifically, there is a possibility that wiring cost increases in proportion to the communication distance in wired communication. On the other hand, when wireless communication is realized, the above-described wiring cost can be substantially eliminated, and thus, an effect of cost reduction particularly in the long-distance communication is expected.

### (System Configuration Example 1 of Robot Communication)

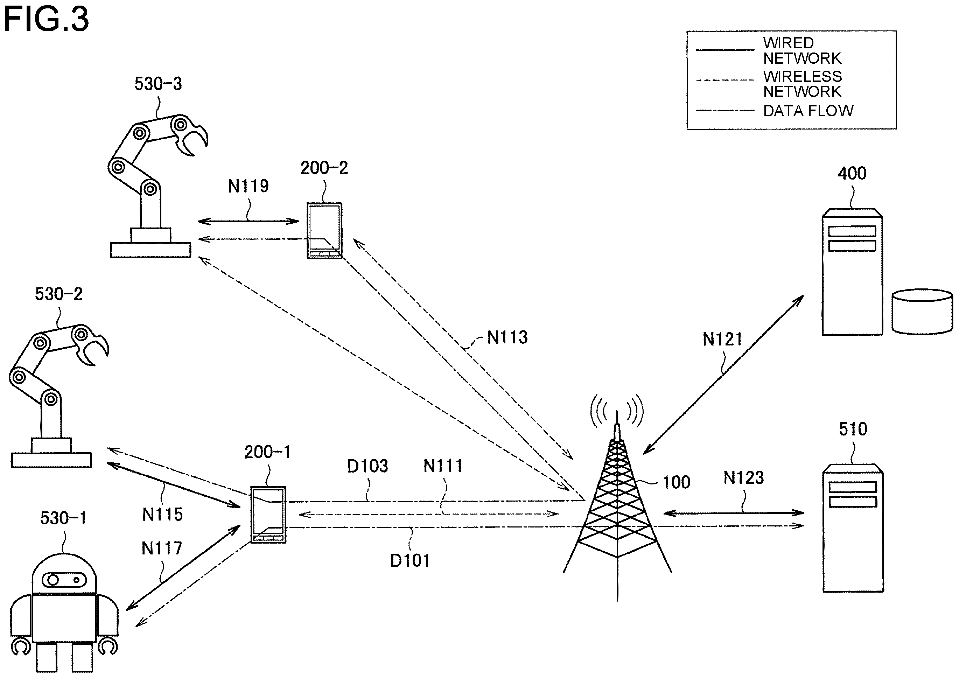

Here, an example of relay communication (that is, wired-wireless relay communication) in which wireless communication and wired communication are combined in the system according to the embodiment of the present disclosure will be outlined with reference to FIG. 3. FIG. 3 is an explanatory diagram for describing the outline of the example of the relay communication in the system according to the present embodiment, and illustrates the example of the relay communication in which the wireless communication and the wired communication are combined. Specifically, FIG. 3 illustrates an example of a schematic configuration of a system assuming communication between a robot 530 (a device having a communication function) and a cloud server 510 installed at a remote location and communication between the robot 530 and another robot 530.

As an example of use cases to which the configuration example illustrated in FIG. 3 is applied, it is possible to assume a case where the robot 530 receives various types of information in real time and operates according to a situation on the spot. As more specific examples, control robots assuming remote robot control such as remote surgery or an operation in a factory, external sensors for traffic light information and camera information installed on a side of a road, and the like correspond to examples of the robot 530 that can be assumed in the system according to the present embodiment.

In the example illustrated in FIG. 3, for example, the base station 100 and a terminal device 200-1 are used to realize communication between the cloud server 510 and a robot 530-1. Specifically, the base station 100 and the cloud server 510 are connected via a wired communication path N123. Further, the terminal device 200-1 and the robot 530-1 are connected via a wired communication path N117. Further, the base station 100 and the terminal device 200-1 are connected via a wireless communication path N111. Based on such premises, in the communication between the robot 530-1 and the cloud server 510, data transmitted from the robot 530-1 is transmitted to the cloud server 510 via the terminal device 200-1 and the base station 100 (that is, via a communication path with reference sign D101), and is received by the cloud server 510.

Further, as another example, the base station 100, the terminal device 200-1, and a terminal device 200-2 are used in order to realize communication between a robot 530-2 and a robot 530-3. Specifically, the terminal device 200-1 and the robot 530-2 are connected via a wired communication path N115. Similarly, the terminal device 200-2 and the robot 530-3 are connected via a wired communication path N119. Further, the base station 100 and the terminal device 200-1 are connected via a wireless communication path N111. Similarly, the base station 100 and the terminal device 200-2 are connected via a wireless communication path N113. Based on such premises, in the communication between the robot 530-2 and the robot 530-3, data transmitted from the robot 530-2 is transmitted to the robot 530-3 via the terminal device 200-1, the base station 100, and the terminal device 200-2 (that is, via a communication path with reference sign D103), and is received by the robot 530-3. Further, it is also possible to assume a case where the robot 530 itself performs wireless communication with the base station 100. As a specific example, when the robot 530-3 has a wireless communication function, the robot 530-3 may directly perform wireless communication with the base station 100.

As described above, it is possible to establish a highly reliable communication system by applying wireless communication to long-distance communication and wired communication to minimum communication.

### (System Configuration Example 2 of Robot Communication)

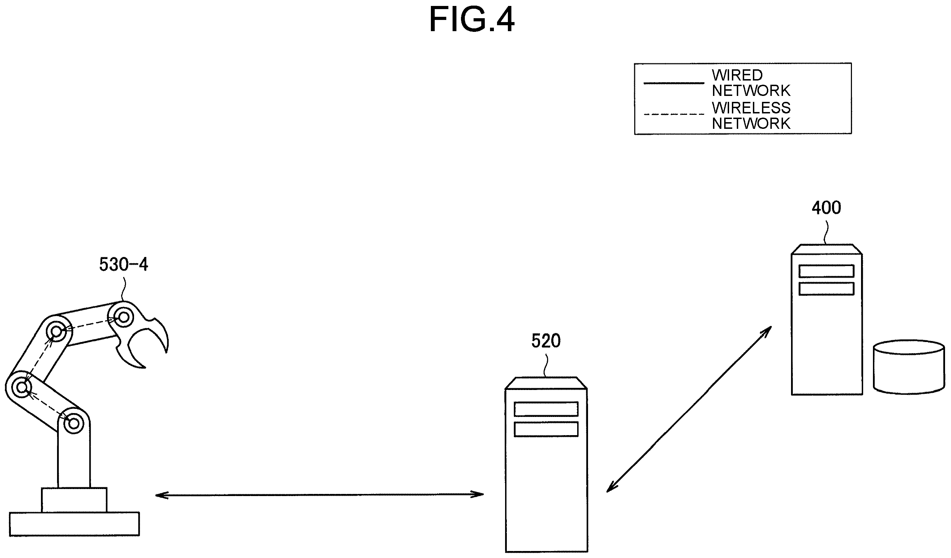

Next, another example of the relay communication in which the wireless communication and the wired communication are combined in the system according to the embodiment of the present disclosure will be outlined with reference to FIG. 4. FIG. 4 is an explanatory diagram for describing the outline of the other example of the relay communication in the system according to the present embodiment, and illustrates the example of the relay communication in which the wireless communication and the wired communication are combined. Specifically, FIG. 4 illustrates an example in a case where the wireless communication is applied to communication between devices inside a robot 530-4.

Due to demands such as weight reduction of a robot and unlimited movable area, the application of wireless communication between devices inside the robot is expected. Further, radio wave propagation is limited inside the robot, and thus, it is possible to reduce the leakage of radio waves to the outside of the robot. As a result, it is also possible to reduce the interference applied to the wireless communication outside the robot, and thus, radio resources can be fully utilized, for example, in the communication inside the robot.

For example, the example in FIG. 4 illustrates a communication system including communication between devices inside the robot such as a CPU and an actuator and communication between a robot and a control server that controls the operation and the like of the robot. For the above-described reason, wireless communication is applied to transmit and receive information between devices inside the robot 530-4 in the example illustrated in FIG. 4. On the other hand, wired communication is applied between the robot 530-4 and a control server 520 that controls the operation and the like of the robot 530-4 to further reduce the influence of other wireless communication in the example illustrated in FIG. 4. Further, wired communication is also applied between the control server 520 and a core network 400.

Based on such a configuration, for example, information on control of a device such as an actuator transmitted from the control server 520 can be transmitted via wired communication between the control server 520 and the robot 530-4 and wireless communication between the devices inside the robot 530-4. As a result, it is possible to realize a robot having a wider movable area as compared with the conventional one.

### <1.5. Protocol Stack>

Next, an example of a protocol stack in the system according to the embodiment of the present disclosure will be described. Note that the protocol stack in this description represents a hierarchy of a network protocol.

As an example, the protocol stack is formed of a physical layer, a link layer, a network layer, a transport layer, and an application layer from the bottom layer. The physical layer is a layer that performs a conversion process for causing a signal transferred from a higher layer to flow to a propagation path and a conversion process for correctly transferring the signal received after having been transmitted through the propagation path to the higher layer. The link layer is a layer having functions such as transmission control, error detection, and retransmission request. The network layer is a layer that controls allocation of an IP address and selection (routing) of a data transmission path. The network layer corresponds to, for example, an IP layer. The transport layer is a layer that serves a role of controlling data transfer. The transport layer corresponds to, for example, a TCP layer and a UDP layer. The application layer is, for example, a layer configured for an application to perform communication.

Further, Ethernet is a standard of a wired local area network (LAN) that defines some protocols for a physical layer and a data link layer. Further, LTE and NR are mobile network standards that define protocols of a physical layer and a data link layer.

### (Protocol Stack in Ethernet)

A protocol stack lower than the IP layer in Ethernet is formed of two layers, that is, a physical layer (PHY layer, L1) and a data link layer (L2). In the physical layer, processing (for example, modulation and demodulation) for transmission and reception of a signal in a wired manner is performed. In the data link layer, processing related to creation of a MAC frame to be transmitted and interpretation of the received MAC frame is performed.

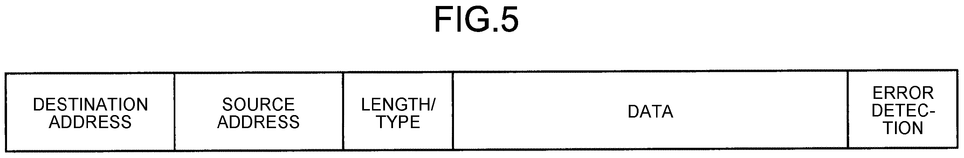

For example, FIG. 5 is a diagram illustrating an example of a configuration of a frame of Ethernet. As illustrated in FIG. 5, the frame of Ethernet is configured as a destination address (MAC address), a source address (MAC address), information on a length/type, data, and a parity bit for error detection are arrayed in this order.

### (Protocol Stack in NR)

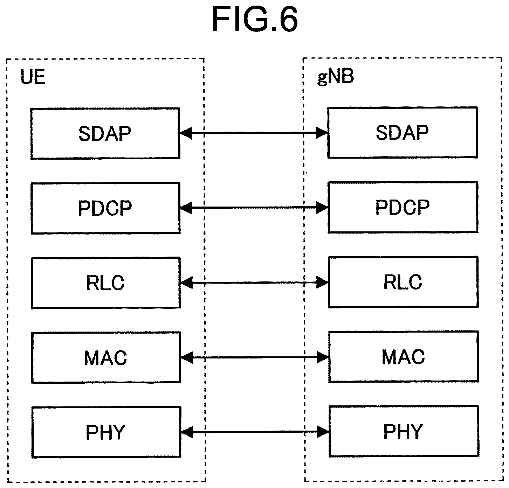

In a protocol stack in NR, layers are defined in more detail. For example, FIG. 6 is a diagram illustrating an example of a protocol stack for data communication (U-Plane, User-Plane) in NR. As illustrated in FIG. 6, the protocol stack of data communication in NR is formed of a physical layer (PHY layer), a medium access control layer (MAC layer), a radio link control layer (RLC layer), a packet data convergence protocol layer (PDCP layer), and a service data adaptation protocol layer (SDAP layer) from the bottom layer. In NR, Layer 1 corresponds to the PHY layer. Further, in NR, Layer 2 is formed of sublayers of the MAC layer, the RLC layer, the PDCP layer, and the SDAP layer. Note that there is a higher layer such as an IP layer above the SDAP layer.

In the PHY layer, for example, processing such as "signal encoding and decoding", "scrambling and descrambling", "layer mapping and demapping", "modulation and demodulation", "resource mapping", "FFT conversion and IFFT conversion", "DC/AC conversion and AC/DC conversion", and "up-conversion and down-conversion" is executed.

In the MAC layer, for example, processing such as "mapping between a logical channel and a transport channel", "multiplexing and demultiplexing of a MAC service data unit (SDU)", "scheduling information report", "error correction using hybrid automatic repeat and request (HARQ)", "priority handling between terminals or logical channels", and "padding" is executed.

In the RLC layer, for example, processing such as "sequence numbering", "error correction using automatic repeat and request (ARQ)", "segmentation and re-segmentation", "reassembly", "redundancy detection", and "protocol error detection" is executed.

In the PDCP layer, for example, processing such as "sequence numbering", "header compression and decompression", "reordering and redundancy detection", "routing", "retransmission", "encryption, decryption, and integrity protection", "data restoration", and "duplication" is executed.

In the SDAP layer, for example, processing such as "mapping between data and QoS flow" and "masking of a QoS flow ID" is executed. Note that the SDAP layer is not used in LTE.

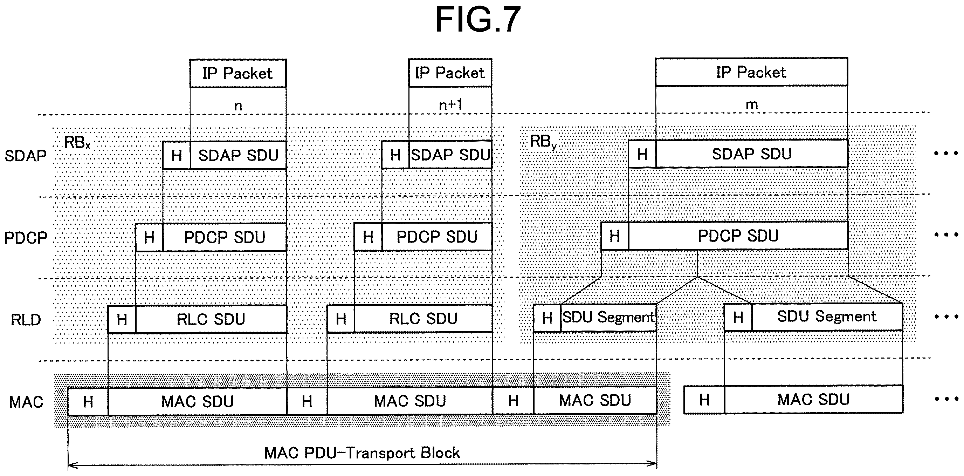

Further, FIG. 7 is a diagram illustrating an example of data flow in Layer 2 of NR. As illustrated in FIG. 7, an IP packet transferred from a higher layer (IP layer) is converted into an SDAP SDU in the SDAP layer, and then, is added with a header to generate an SDAP protocol data unit (PDU). The SDAP PDU transferred from the SDAP layer is converted into a PDCP SDU, and then, is added with a header to generate a PDCP PDU. The PDCP PDU transferred from the PDCP layer is converted into an RLC SDU, and then, is added with a header to generate an RLC PDU. Note that the PDCP PDU can be divided at the RLC layer. Finally, the RLC PDU transferred from the RLC layer is converted into a MAC SDU, and then, is added with a header to generate a MAC PDU. Note that it is possible to multiplex a plurality of MAC SDUs to generate one MAC PDU in the MAC layer.

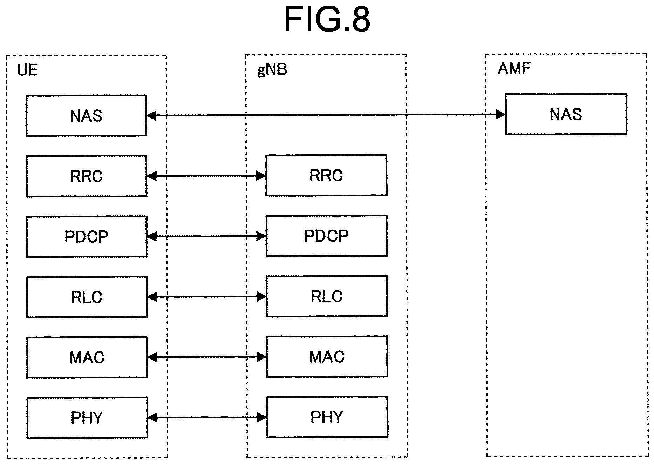

FIG. 8 is a diagram illustrating an example of a protocol stack of control information communication (C-Plane, Control-Plane) in NR. The protocol stack of the control information communication in NR is formed of a PHY layer, a MAC layer, an RLC layer, a PDCP layer, a radio resource control layer (RRC layer), and a non-access stratum layer (NAS layer) from the bottom layer. In NR, Layer 3 corresponds to the RRC layer and the NAS layer. Note that an access and mobility management function (AMF) is a partial function of a core network. Further, the RRC layer in this example has a configuration included in the base station, but is not limited to this configuration, and the RRC layer may exist in the core network.

In the RRC layer, for example, processing such as "notification of system information", "paging", "establishment, maintenance, and release of connection between a terminal device and a network", "security", "establishment, setting, maintenance, and release of data flow", "mobility processing such as handover, content transfer, and cell selection/reselection", "QoS management", "measurement report and report control", and "detection and restoration of link failure" is executed.

In the NAS layer, for example, processing such as "mobility management", "cell control management", "session management", and "identity management" is executed.

### <<2. Study on Relay Communication in which Communications Having Different Communication Schemes Are Combined>>

Next, relay communication in which communications having different communication schemes such as wired communication and wireless communication are combined will be studied mainly focusing on a protocol stack, and then, technical problems of the system according to the embodiment of the present disclosure will be outlined.

### <2.1. Example of Protocol Stack of Relay Communication in which Wireless Communication and Wired Communication Are Combined>

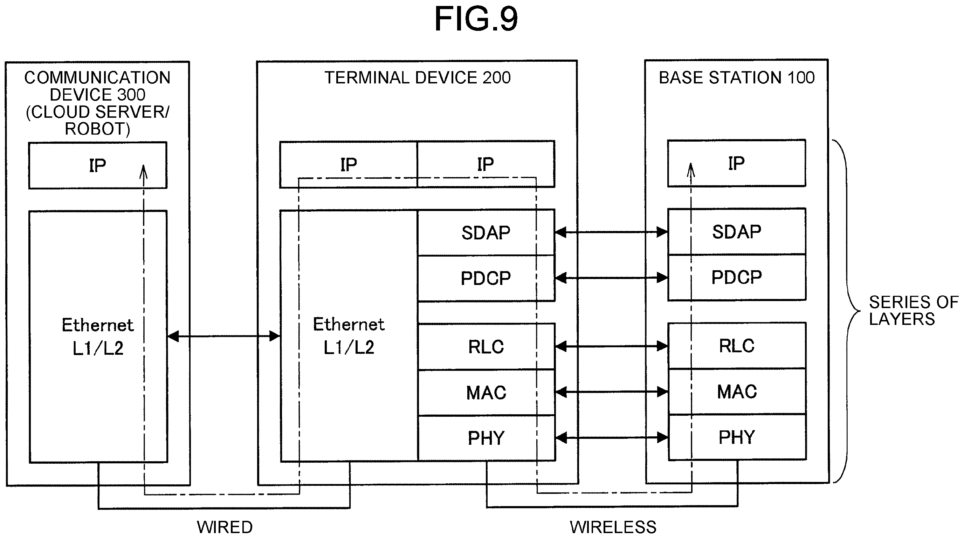

First, as a comparative example, an example of a protocol stack of data communication (U-Plane) in a case where the conventional scheme is applied to the relay communication in which wireless communication and wired communication are combined will be described with reference to FIG. 9. FIG. 9 is a diagram illustrating the example of the protocol stack of the data communication in the relay communication in which wireless communication and wired communication are combined. In the example illustrated in FIG. 9, wireless communication using NR is applied to a transmission line between the base station 100 and the terminal device 200, and wired communication using Ethernet is applied to a transmission line between the terminal device 200 and a device such as a cloud server and a robot (hereinafter, also referred to as "communication device 300" for convenience). Further, the example illustrated in FIG. 9 does not illustrate a layer higher than the IP layer.

Since standards of a physical layer and a link layer are different between NR and Ethernet, when data is transmitted between the base station 100 and the communication device 300, data is transferred to the IP layer, which is a common layer, in the terminal device 200 that relays the transmission. Then, in the terminal device 200, a format of the data is converted into formats of the physical layer and link layer corresponding to the respective standards (for example, a header is replaced according to the communication standard).

Here, the data flow in the example illustrated in FIG. 9 will be described focusing on the case where data is transmitted from the base station 100 to the communication device 300.

The data transmitted from the base station 100 is transferred from the IP layer to the SDAP layer, the PDCP layer, the RLC layer, the MAC layer, and the PHY layer in this order, and is transmitted to the terminal device 200 via a wireless transmission line on the base station 100 side. The terminal device 200 transfers the received radio signal (data) to the PHY layer, the MAC layer, the RLC layer, the PDCP layer, and the SDAP layer in this order, and converts the received radio signal (data) into data corresponding to the IP layer. Next, when transferring data from the terminal device 200 to the communication device 300, the target data is converted between transmission lines at the IP layers, then, is transferred to Layer 2 (L2) and Layer 1 (L1) of Ethernet in this order, and is transmitted to the communication device 300 via a wired transmission line. The communication device 300 transfers the received wired signal (data) to Layer 1 (L1) and Layer 2 (L2) of Ethernet in this order, and converts the received wired signal (data) into data corresponding to the IP layer. The data is transmitted from the base station 100 to the communication device 300 through a series of procedures as described above.

Note that, in the following description, an operation of transferring data from a lower layer to a predetermined higher layer in a protocol stack before conversion and transferring the data to a lower layer again in the converted protocol stack in order to perform protocol conversion (for example, header replacement or the like) between communications having different communication schemes will be also referred to as "return" for convenience. As a specific example, a "layer that performs return" means a layer in which protocol conversion is performed between communications having different communication schemes.

### <2.2. Technical Problems Related to Relay Communication in which Wireless Communication and Wired Communication Are Combined>

Next, technical problems in the relay communication in which communications having different communication schemes such as wired communication and wireless communication are combined will be described hereinafter. As described above, since the wireless communication and wired communication have different standards (particularly, standards of the link layer and the physical layer), QoS control in a layer above the IP layer, which is the common protocol, is performed.

However, if independent QoS control is performed on each path in robot communication where low latency and reliability are important, the possibility that end-to-end QoS is not guaranteed can be considered. As a specific example, when transmission and reception cycles and timing differ between wireless communication and wired communication, latency of a path having a longer cycle becomes a bottleneck, which is likely to increase the end-to-end latency.

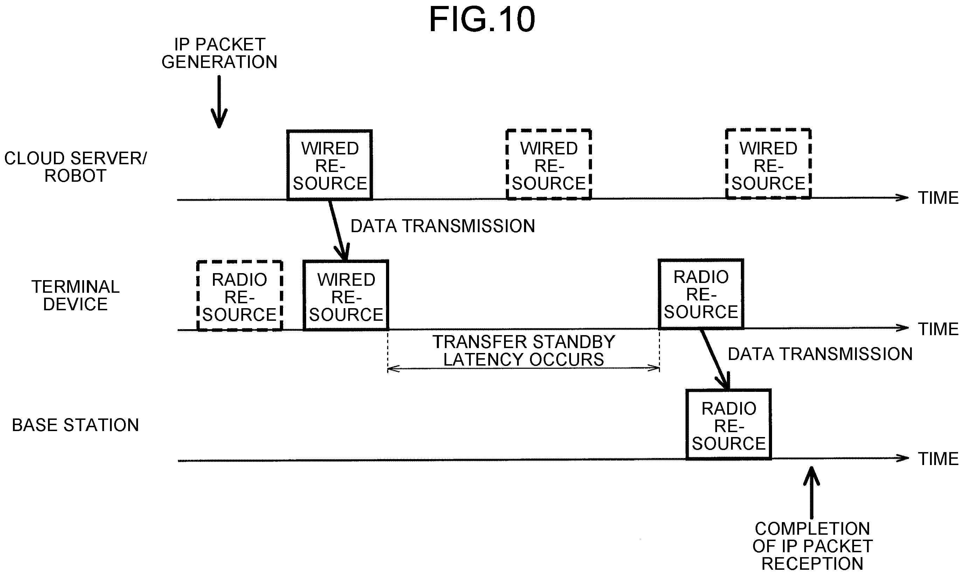

For example, FIG. 10 is an explanatory diagram for describing an outline of an example of latency in the relay communication in which communications having different communication schemes are combined, and is a diagram illustrating an example of allocation of transmission and reception resources when independent QoS control is performed on each path. In FIG. 10, the horizontal axis represents time.

When independent QoS control is performed, there is a possibility that cycles and timing of transmission resources are not aligned between the communication between the communication device 300 such as the cloud server and the robot and the terminal device 200, and the communication between the terminal device 200 and the base station 100 as illustrated in FIG. 10. As a result, there is a case where long transfer standby latency occurs, which results in increased end-to-end latency. Further, it is also possible to assume a case where, for example, transmission and reception of redundant data such as repeated transmission on a path where reliability is sufficiently guaranteed consume communication resources more than necessary, which makes it difficult to operate other communication systems.

Further, the protocol is converted up to the IP layer, latency due to the protocol conversion process is likely to occur. For example, when converting the radio signal (data) transmitted from the base station 100 to the terminal device 200 up to the IP layer in the example illustrated in FIG. 9, the radio signal (data) needs to pass through five layers. In particular, the amount of information (number of bits) of information on device control in the robot is sometimes small, and packet division and synthesis processing are not required in some cases. Further, there is also a possibility that the proportion of headers added in the respective layer relatively increases as compared to the information on the device control of the robot, which results in communication overhead and inefficient control.

Further, there is a case where carrier sense multiple access/collision detection (CSMA/CD) is adopted in Ethernet, and fine orthogonal resource allocation such as time-division multiplexing or frequency-division multiplexing is hardly performed. As a result, when packets collide with each other, it is necessary to wait for a random backoff time, and then, perform retransmission, which may cause further latency in some cases.

In view of the above situation, the present disclosure proposes a technology that enables end-to-end communication to be realized in a more preferable manner even in a situation where a plurality of communications having different communication schemes are applied in communication between a plurality of communication devices. Specifically, the present disclosure proposes a protocol stack and a resource control method for solving the above-described problems.

### <<3. Technical Features>>

Technical features of the system according to the embodiment of the present disclosure will be described hereinafter.

### <3.1. Configuration Examples>

First, an example of a functional configuration of a device constituting the system according to the embodiment of the present disclosure will be described.

### <3.1.1. Configuration Example of Base Station>

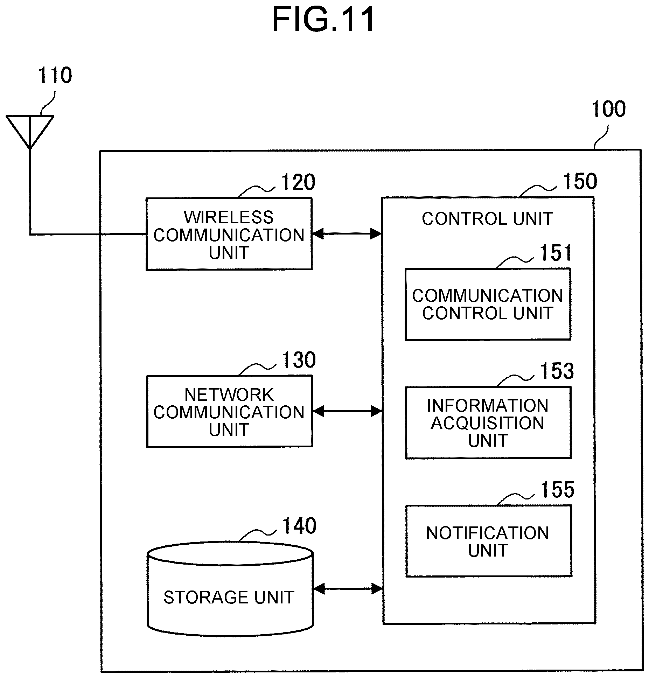

Hereinafter, an example of a configuration of the base station 100 according to the embodiment of the present disclosure will be described with reference to FIG. 11. FIG. 11 is a block diagram illustrating the example of the configuration of the base station 100 according to the embodiment of the present disclosure. Referring to FIG. 11, the base station 100 includes an antenna unit 110, a wireless communication unit 120, a network communication unit 130, a storage unit 140, and a control unit 150.

### (1) Antenna Unit 110

The antenna unit 110 radiates a signal output by the wireless communication unit 120 into a space as a radio wave. Further, the antenna unit 110 converts a radio wave in the space into a signal and outputs the signal to the wireless communication unit 120.

### (2) Wireless Communication Unit 120

The wireless communication unit 120 transmits and receives a signal. For example, the wireless communication unit 120 transmits a downlink signal to a terminal device and receives an uplink signal from the terminal device.

### (3) Network Communication Unit 130

The network communication unit 130 transmits and receives information. For example, the network communication unit 130 transmits information to other nodes and receives information from the other nodes. For example, the above-described other nodes include the other base stations and core network nodes.

### (4) Storage Unit 140

The storage unit 140 temporarily or permanently stores a program and various types of data for the operation of the base station 100.

### (5) Control Unit 150

The control unit 150 provides various functions of the base station 100. The control unit 150 includes a communication control unit 151, an information acquisition unit 153, and a notification unit 155. Note that the control unit 150 may further include other components in addition to these components. That is, the control unit 150 can also perform operations other than operations of these components.

The communication control unit 151 executes various processes related to the control of wireless communication with the terminal device 200 via the wireless communication unit 120. Further, the communication control unit 151 executes various processes related to the control of communication with the other node (for example, the other base station, core network node, or the like) via the network communication unit 130.

The information acquisition unit 153 acquires various types of information from the terminal device 200 and the other nodes. The acquired information may be used, for example, for control of wireless communication with the terminal device, control for cooperation with the other nodes, and the like.

The notification unit 155 notifies the terminal device 200 and the other nodes of various types of information. As a specific example, the notification unit 155 may notify the terminal device 200 of various types of information for the terminal device 200 in a cell to perform wireless communication with the base station 100. Further, as another example, the notification unit 155 may notify another node (for example, another base station) of the information acquired from the terminal device in the cell. Further, the notification unit 155 may notify the terminal device 200 in the cell of information for the terminal device 200 to communicate with another communication device (for example, the communication device 300 such as the cloud server and the robot).

### <3.1.2. Configuration Example of Terminal Device>

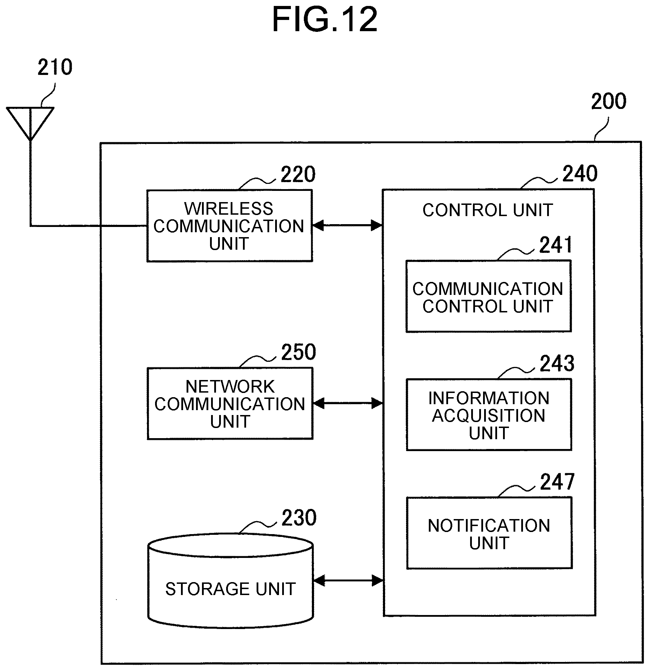

Hereinafter, an example of a functional configuration of the terminal device 200 according to the embodiment of the present disclosure will be described with reference to FIG. 12. FIG. 12 is a block diagram illustrating an example of the configuration of the terminal device 200 according to the embodiment of the present disclosure. As illustrated in FIG. 12, the terminal device 200 includes an antenna unit 210, a wireless communication unit 220, a storage unit 230, and a control unit 240. Further, the terminal device 200 may relay communication between another communication device (for example, the communication device 300 such as the cloud server and the robot) and the base station 100. In this case, the terminal device 200 may include a network communication unit 250 configured to perform communication with the other communication device (hereinafter referred to as the communication device 300).

### (1) Antenna Unit 210

The antenna unit 210 radiates a signal output by the wireless communication unit 220 into a space as a radio wave. Further, the antenna unit 210 converts a radio wave in the space into a signal and outputs the signal to the wireless communication unit 220.

### (2) Wireless Communication Unit 220

The wireless communication unit 220 transmits and receives a signal. For example, the wireless communication unit 220 receives a downlink signal from a base station and transmits an uplink signal to the base station.

Further, there is a case where the terminal device 200 directly communicate with another terminal device 200 without the intervention of the base station 100 in the system 1 according to the present embodiment. In this case, the wireless communication unit 220 may transmit and receive a side link signal to and from the other terminal device 200.

### (3) Storage Unit 230

The storage unit 230 temporarily or permanently stores a program and various types of data for the operation of the terminal device 200.

### (4) Network Communication Unit 250

The network communication unit 250 transmits and receives information. For example, the network communication unit 250 transmits information to the other communication devices 300 and receives information from the other communication devices 300. Examples of the above-described communication devices 300 can include other devices having communication functions such as a cloud server and a robot.

### (5) Control Unit 240

The control unit 240 provides various functions of the terminal device 200. For example, the control unit 240 includes a communication control unit 241, an information acquisition unit 243, and a notification unit 247. Note that the control unit 240 may further include other components in addition to these components. That is, the control unit 240 can also perform operations other than operations of these components.

The communication control unit 241 executes various processes related to the control of wireless communication with the base station 100 via the wireless communication unit 220. Further, the communication control unit 241 executes a process related to the control of communication with the communication device 300 via the network communication unit 250.

Further, the communication control unit 241 may execute various processes related to the relay of communication (that is, data transmission) between the base station 100 and the communication device 300. As a specific example, the communication control unit 241 may relay the communication between the base station 100 and the communication device 300 by converting one of data transmitted to and from the base station 100 and data transmitted to and from the communication device 300 to the other. Note that details of this process will be described later.

The information acquisition unit 243 acquires various types of information from the base station 100 and the other communication device 300. As a specific example, the information acquisition unit 243 may acquire information on the relay of communication between the base station 100 and the communication device 300 from the above base station 100 and communication device 300.

The notification unit 247 notifies the base station 100 and the other communication devices 300 of various types of information. As a specific example, the notification unit 247 may notify the base station 100 and the communication device 300 of the information on the relay of communication between the above base station 100 and communication device 300.

### <3.1.3. Configuration Example of Communication Device>

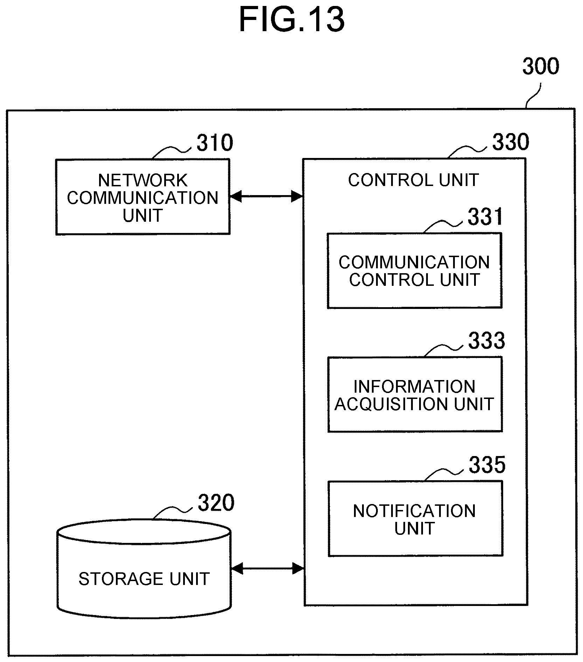

Hereinafter, an example of a functional configuration of the communication device 300 according to the embodiment of the present disclosure will be described with reference to FIG. 13. FIG. 13 is a block diagram illustrating the example of the configuration of the communication device 300 according to the embodiment of the present disclosure, and illustrates an example of a functional configuration of a device, for example, having a communication function such as a cloud server and a robot. As illustrated in FIG. 13, the communication device 300 includes a network communication unit 310, a storage unit 320, and a control unit 330.

### (1) Network Communication Unit 310

The network communication unit 310 transmits and receives information. For example, the network communication unit 310 transmits information to the terminal device 200 and receives information from the terminal device 200. Note that a communication scheme in which the network communication unit 310 transmits and receives information to and from another communication device is not particularly limited, and may be appropriately changed according to a type of communication path with another communication scheme, for example. Further, the type of communication path in which the network communication unit 310 transmits and receives information to and from the other communication device is not particularly limited, either, and may be a wired communication path or a wireless communication path, for example.

### (2) Storage Unit 320

The storage unit 320 temporarily or permanently stores a program and various types of data for the operation of the communication device 300.

### (3) Control Unit 330

The control unit 330 provides various functions of the communication device 300. The control unit 330 includes a communication control unit 331, an information acquisition unit 333, and a notification unit 335. Note that the control unit 330 may further include other components in addition to these components. That is, the control unit 330 can also perform operations other than operations of these components.

The communication control unit 331 executes various processes related to the control of communication with another communication device (for example, the terminal device 200) via the network communication unit 310. As a specific example, the communication control unit 331 may decode data transmitted from the base station 100 based on relay by the terminal device 200 according to a mode of the relay. Further, the communication control unit 331 may encode data transmitted to the base station 100 based on relay by the terminal device 200 according to a mode of the relay. Note that details of these processes will be described later.

The information acquisition unit 333 acquires various types of information from the base station 100 and the terminal device 200. As a specific example, the information acquisition unit 333 may acquire information for communication with the base station 100 based on relay by the terminal device 200 from the above base station 100 and terminal device 200.

The notification unit 335 notifies the base station 100 and the terminal device 200 of various types of information. As a specific example, the notification unit 335 may notify the above base station 100 and communication device 300 of the information on the communication with the base station 100 based on the relay by the terminal device 200.

### <3.2. Control Example of Relay Communication>

Next, an example of control of relay communication in the system according to the embodiment of the present disclosure will be described. Note that a description will be given hereinafter mainly focusing on an example where relay communication in which wireless communication and wired communication are combined is applied in order to facilitate the understanding of the technical features of the system according to the present embodiment, but the scope of application of the technology according to the present embodiment is not necessarily limited. That is, the technology according to the present embodiment can be applied to any system in which relay communication in which a plurality of communications having different communication schemes are combined is performed.

First, an example of a protocol stack assuming relay communication in which wireless communication and wired communication are combined will be described as an example of the protocol stack in the system according to the present embodiment. In the system according to the present embodiment, the conversion of one of data transmitted by wireless communication and data transmitted by wired communication to the other is performed in a layer lower than an IP layer (in other words, any layer below a layer corresponding to a communication protocol according to selection of a transmission path) among a series of layers constituting a protocol stack.

### (Example 1 of Protocol Stack of Data Signal Communication)

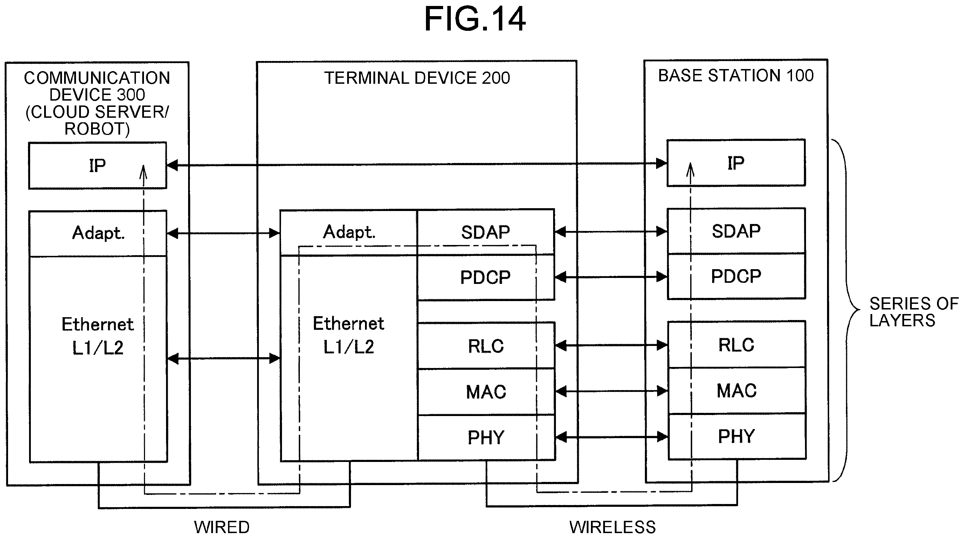

For example, FIG. 14 is an explanatory diagram for describing an example of the protocol stack in the system according to the present embodiment, and illustrates an example of the protocol stack assuming relay communication in which wireless communication and wired communication are combined. In the example illustrated in FIG. 14, processing related to conversion between data transmitted via wireless communication and data transmitted via wired communication is performed in an SDAP layer. An adaptation layer is inserted (set) in the protocol stack on the wired communication side as a layer corresponding to the SDAP layer of NR. As a result, processing of Ethernet L1/L2 is performed based on QoS flow defined in the SDAP layer in the wired communication. Specifically, the processing related to transmission and reception is executed such that an SDAP PDU having a higher QoS priority is more prioritized.

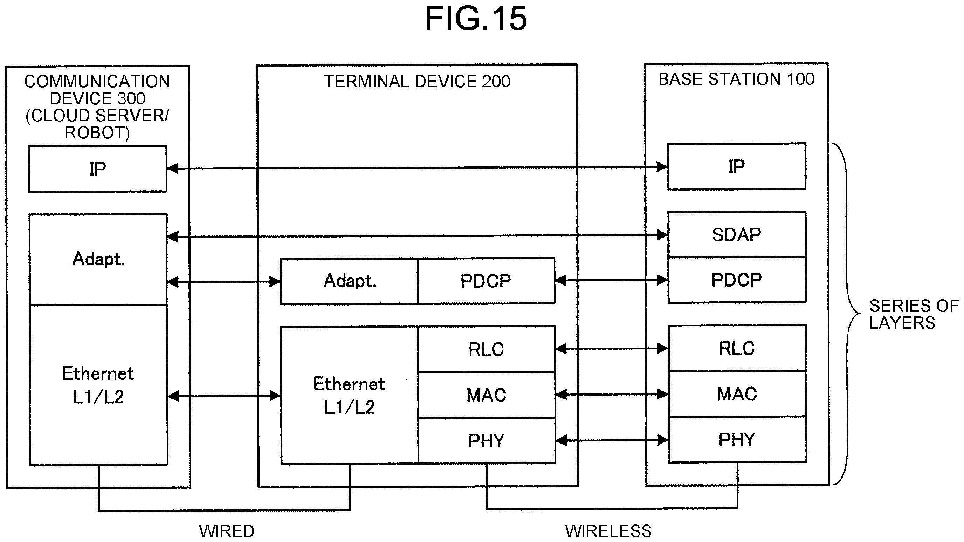

Note that the terminal device 200 corresponds to an example of a communication device that relays communication between the base station 100 and the communication device 300 in the example illustrated in FIG. 14. At this time, in the communication device, a communication unit (for example, the wireless communication unit 220 illustrated in FIG. 12) that communicates with a communication device such as the base station 100 via a wireless communication path corresponds to an example of a "first communication unit". Further, a communication scheme for the first communication unit to communicate with another communication device corresponds to an example of a "first communication scheme". That is, in the case of the example illustrated in FIG. 14, the communication scheme for communication between the terminal device 200 and the base station 100 via the wireless communication path can correspond to an example of the "first communication scheme". Further, in the above communication device, a communication unit (for example, the network communication unit 250 illustrated in FIG. 12) that communicates with another communication device (for example, the communication device 300) based on a communication scheme different from the first communication scheme corresponds to an example of a "second communication unit". Further, a communication scheme for the second communication unit to communicate with another communication device corresponds to an example of a "second communication scheme". That is, in the case of the example illustrated in FIG. 14, the communication scheme for communication between the terminal device 200 and the communication device 300 via the wired communication path can correspond to an example of the "second communication scheme". Further, when the terminal device 200 relays the communication between the base station 100 and the communication device 300, the terminal device 200 corresponds to an example of a "third communication device". Further, the base station 100 with which the third communication device communicates based on the first communication scheme corresponds to an example of a "first communication device". Further, the communication device 300 with which the third communication device communicates based on the second communication scheme corresponds to an example of a "second communication device". Note that the same applies to examples illustrated in FIGS. 15 to 17 details of which will be described later.

Further, among the series of layers defined as the protocol stack of NR, the SDAP layer in which the protocol conversion at the time of data transfer is performed corresponds to an example of a "first layer", in the example illustrated in FIG. 14. Further, in the protocol stack of Ethernet, the adaptation layer inserted (set) so as to correspond to the SDAP layer corresponds to an example of a "second layer".

### (Example 2 of Protocol Stack of Data Signal Communication)

FIG. 15 is an explanatory diagram for describing another example of the protocol stack in the system according to the present embodiment, and illustrates another example of the protocol stack assuming the relay communication in which wireless communication and wired communication are combined. In the example illustrated in FIG. 15, processing related to conversion between data transmitted via wireless communication and data transmitted via wired communication is performed in a PDCP layer. An adaptation layer is inserted (set) in the protocol stack on the wired communication side as a layer corresponding to the SDAP layer and PDCP layer of NR. As a result, in the wired communication, the processing of Ethernet L1/L2 is performed after the operation performed in the PDCP layer has been performed in the adaptation layer of the terminal device 200. On the other hand, the terminal device 200 transfers data without performing the processing performed in the SDAP layer. Specifically, the terminal device 200 does not perform QoS flow control, but transfers data based on the control specified in advance by RRC settings.

Note that, among a series of layers defined as the protocol stack of NR, the PDCP layer in which the protocol conversion at the time of data transfer is performed corresponds to an example of the "first layer", in the example illustrated in FIG. 15. Further, in the protocol stack of Ethernet, the adaptation layer inserted (set) so as to correspond to the PDCP layer corresponds to an example of the "second layer".

### (Example 3 of Protocol Stack of Data Signal Communication)

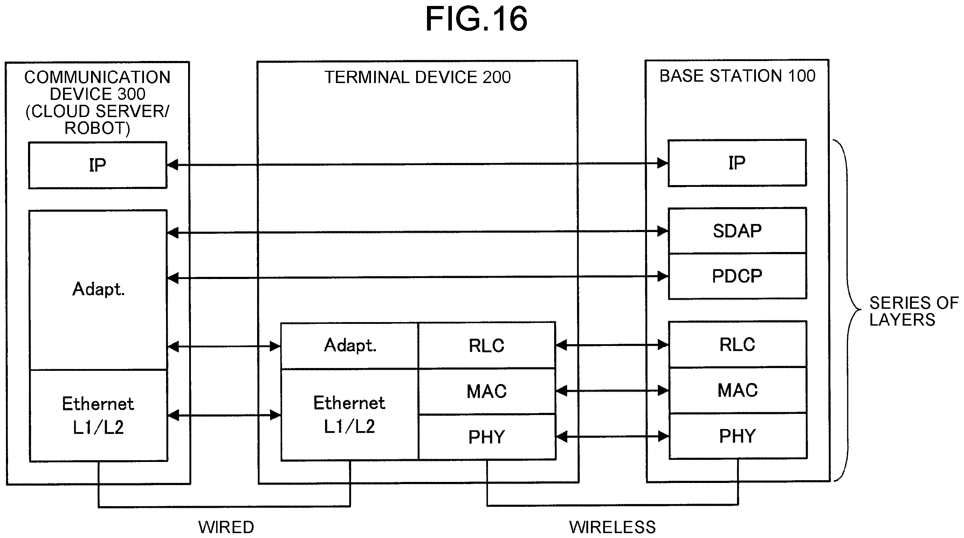

FIG. 16 is an explanatory diagram for describing still another example of the protocol stack in the system according to the present embodiment, and illustrates still another example of the protocol stack assuming the relay communication in which wireless communication and wired communication are combined. In FIG. 16, processing related to conversion between data transmitted via wireless communication and data transmitted via wired communication is performed in an RLC layer. On the wired communication side, an adaptation layer is inserted (set) as a layer corresponding to an SDAP layer, a PDCP layer, and the RLC layer of NR. As a result, in the wired communication, the processing of Ethernet L1/L2 is performed after the operation performed in the RLC layer has been performed in the adaptation layer of the terminal device 200. On the other hand, the terminal device 200 transfers data without performing the processing performed in the SDAP layer and the PDCP layer. Specifically, the terminal device 200 does not perform encryption, complex, and integrity check. That is, the same code is used between the wired communication and the wireless communication.

Note that, among a series of layers defined as the protocol stack of NR, the RLC layer in which the protocol conversion at the time of data transfer is performed corresponds to an example of the "first layer", in the example illustrated in FIG. 16. Further, in the protocol stack of Ethernet, the adaptation layer inserted (set) so as to correspond to the RLC layer corresponds to an example of the "second layer".

### (Example 4 of Protocol Stack of Data Signal Communication)

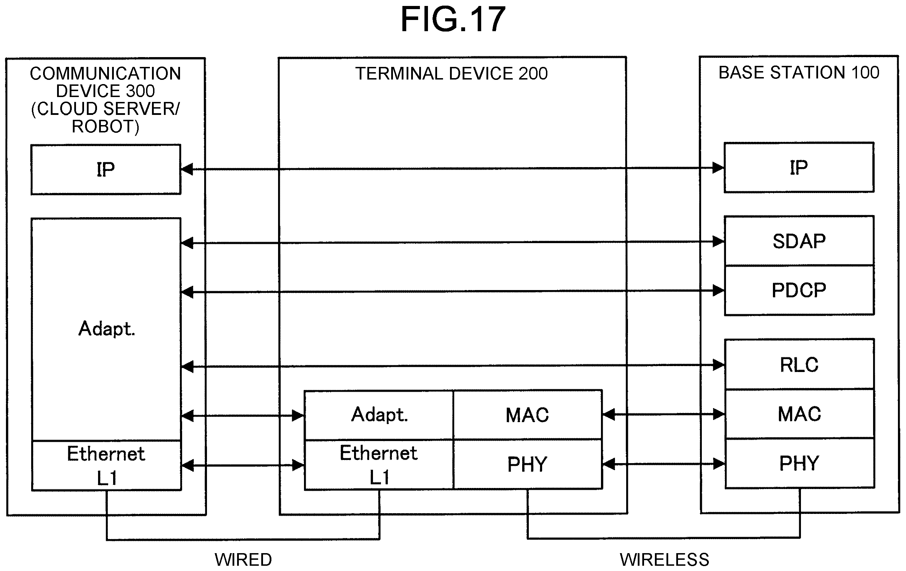

FIG. 17 is an explanatory diagram for describing still another example of the protocol stack in the system according to the present embodiment, and illustrates still another example of the protocol stack assuming the relay communication in which wireless communication and wired communication are combined. In FIG. 17, processing related to conversion between data transmitted via wireless communication and data transmitted via wired communication is performed in a MAC layer. On the wired communication side, an adaptation layer is inserted as a layer corresponding to an SDAP layer, a PDCP layer, an RLC layer, and the MAC layer of NR. As a result, in the wired communication, the processing of Ethernet L1 is performed after the operation performed in the MAC layer has been performed in the adaptation layer of the terminal device 200. On the other hand, the terminal device 200 transfers data without performing the processing performed in the SDAP layer, the PDCP layer, and the RLC layer. Specifically, in each path, error correction by RLC is not performed, and RLC retransmission is not performed. As a result, even lower latency is expected.

Note that, among a series of layers defined as the protocol stack of NR, the MAC layer in which the protocol conversion at the time of data transfer is performed corresponds to an example of the "first layer", in the example illustrated in FIG. 17. Further, in the protocol stack of Ethernet, the adaptation layer inserted (set) so as to correspond to the MAC layer corresponds to an example of the "second layer".

### (Control Example of Protocol Stack)

In the system according to the present embodiment, the base station or core network can select any protocol stack among the above-described data communication (U-Plane) protocol stacks according to various situations. As a specific example, the base station or core network may select a more appropriate protocol stack (for example, a protocol stack in which required specifications can be achieved in a more preferable manner) among the above-described data communication protocol stacks according to a communication path situation or a packet type.

Communication line quality is an example of the communication path situation. For example, the probability of a block error tends to be low in a path with a good communication line environment (for example, high SINR, high reliability, and the like) such as the inside of a robot. Therefore, for example, it is preferable that the terminal device 200 is controlled so as to perform return in a layer lower than the RLC layer (that is, perform protocol conversion in the layer lower than the RLC layer). With such control, the latency accompanying the protocol conversion is shortened so that lower-latency communication can be realized.

Further, as another example, the probability of the block error tends to increase in a path having a poor communication line environment (low SINR, low reliability, and the like) such as long-distance communication. Therefore, for example, it is preferable to control the terminal device 200 so as to perform return in a layer above the RLC layer (that is, perform protocol conversion in the layer above the RLC layer). With such control, ARQ processing is performed in the RLC layer so that more stable communication can be realized.

Further, an example of the path situation is the latency. In a path with large end-to-end latency such as long-distance communication or the intervention of a plurality of times of relays, it is preferable to perform control so as to perform return in a lower layer. On the other hand, in a short-distance path with small propagation latency, control may be performed so as to perform return in a higher layer.

An example of the packet type is information that requires real-timeliness. For example, for information that requires real-timeliness, it is preferable to perform return in a lower layer as in the example described with reference to FIGS. 16 and 17. On the other hand, for information that does not require real-timeliness, it is preferable to perform return in a higher layer as in the example described with reference to FIGS. 14 and 15.

### (Adaptation Layer)

In the adaptation layer, at least any one of conversion from a frame configuration of NR to a frame configuration of Ethernet and the reverse conversion thereof is performed. As a specific example, Ethernet header information (a destination MAC address, a source MAC address, length/type information, and the like) is inserted, removed, and the like in the adaptation layer. The content of the added Ethernet header information is set in advance, for example, based on communication settings from the base station 100.

Further, in the adaptation layer, a layer of NR, which has not been processed by the other communication devices, is processed due to the return at the time of relay. For example, when ARQ control in the RLC layer is not performed due to the return in a layer lower than the RLC layer in the terminal device 200 that relays the communication between the base station 100 and the communication device 300, the ARQ control in the RLC layer is performed in the adaptation layer of the communication device 300. Further, when encryption, decryption, and integrity protection in the PDCP layer are not performed due to the return in a layer lower than the PDCP layer in the terminal device 200 that relays the communication between the base station 100 and the communication device 300, the encryption, decryption, and integrity protection in the PDCP layer are performed in the adaptation layer of the communication device 300.

### (Control Signal Communication)

As a method for realizing communication using the above-described data communication (U-Plane) protocol stack, the base station 100 makes communication settings (RRC settings) in advance for subordinate terminal devices and the communication device 300 (for example, a cloud server, a robot, or the like) connected in a wired manner.

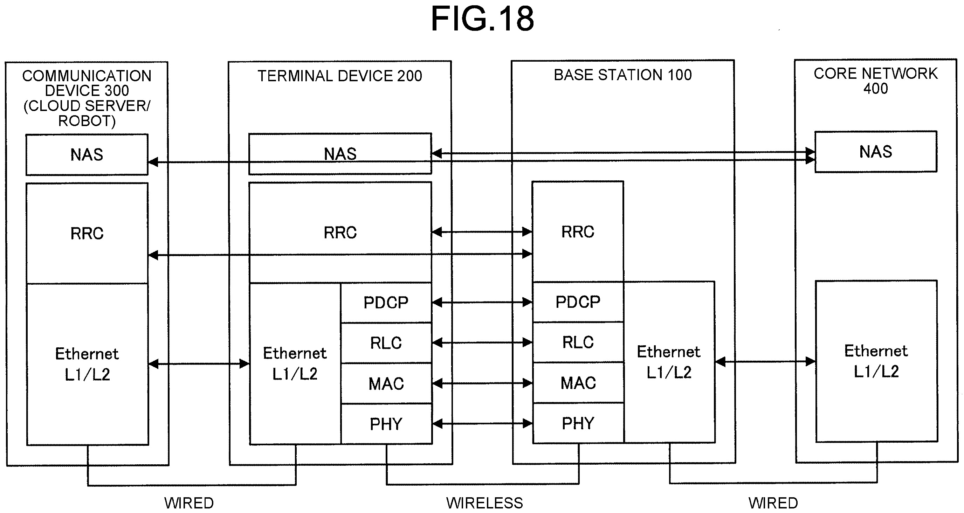

For example, FIG. 18 is a diagram illustrating an example of a protocol stack of control signal communication (C-Plane) in the system according to the embodiment of the present disclosure. As illustrated in FIG. 18, RRC is set from the base station 100 for each of the communication device 300 (for example, a cloud server, a robot, or the like) and the terminal device 200. Further, from the core network 400, authentication is performed in the NAS layer for each of the communication device 300 and the terminal device 200.

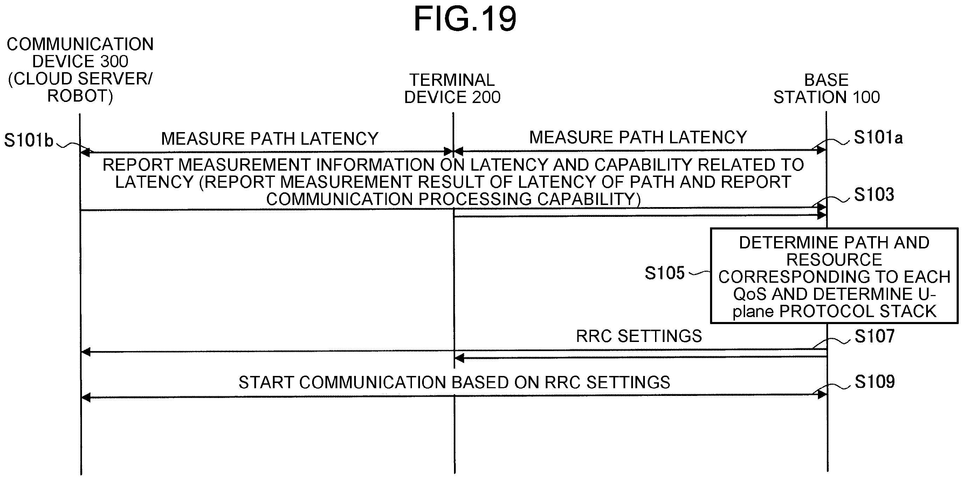

Next, an example of a relay communication sequence in the system according to the embodiment of the present disclosure will be described. For example, FIG. 19 is a sequence diagram illustrating an example of flow of a series of processes of RRC settings and relay communication in the system according to the embodiment. Note that the example illustrated in FIG. 19 illustrates the example of the flow of the series of processes when the terminal device 200 relays the communication between the base station 100 and the communication device 300 (for example, a device having a communication function such as a cloud server and a robot).

As illustrated in FIG. 19, the terminal device 200 and the communication device 300 measure the latency of a communication path (for example, a wired communication path or a wireless communication path) (S101a, S101b). Examples of a method for measuring the latency of the communication path include a method of transmitting a predetermined data signal (for example, a test signal such as ping, dummy data, data including the transmission time, or the like) and measuring the time until a response is returned.

Next, the terminal device 200 and the communication device 300 report measurement information on the latency and information on the capability related to the latency to the base station 100 (S103). Examples of the measurement information on the latency include a result obtained by the above-described measurement of the latency of the communication path. Further, examples of the information of the capability related to the latency include a communication processing capability related to the time required for protocol conversion or the like, a processing capability related to signal transmission and reception, and the like.

Further, the terminal device 200 and the communication device 300 may also report information on communication traffic to the base station 100. Examples of the information on communication traffic include a traffic type (information on QoS) and a traffic volume (for example, a buffer status report or the like).

The base station 100 determines a communication path and transmission and reception resources corresponding to each QoS, a data communication (U-plane) protocol stack, and the like based on the information notified from the terminal device 200 and the communication device 300 (S105).

The communication path and transmission and reception resources corresponding to each QoS, and the data communication (U-plane) protocol stack determined by the base station 100 are set by RRC, for example, in each of the terminal device 200 and the communication device 300 (S107).

Then, each of the terminal device 200 and the communication device 300 starts communication based on the above RRC settings (S109).

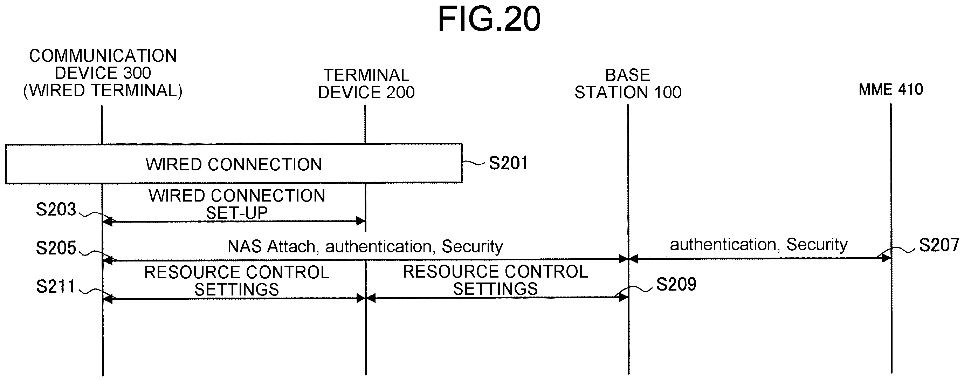

Further, FIG. 20 is an explanatory diagram for describing an example of an initial connection sequence of a wired terminal (the communication device 300) connected to a core network via a wired communication path. In FIG. 20, it is assumed that the conventional terminal device 200 (wireless terminal) is already connected to the base station 100 and the core network 400.

Note that a device, which can be connected to the core network by being connected to a device that performs communication in a wireless manner (for example, the terminal device 200) via a wired communication path, is also referred to as a "wired device (wired terminal)" in the present disclosure. The wired terminal has various different properties from a wireless terminal. As a specific example, the wired terminal does not have to measure the surrounding radio environment (RRM measurement). Further, the wired terminal does not have to report measurement information of the surrounding radio environment.

When the communication device 300 (wired terminal) and the terminal device 200 are connected via a wired communication path (S201), first, the set-up of the wired connection between the communication device 300 and the terminal device 200 is started (S203). During the set-up of the wired connection, the communication device 300 makes a connection request to the terminal device 200. The terminal device 200 having received the request provides setting information to the communication device 300. The communication device 300 makes a setting of the wired communication based on the setting information provided by the terminal device 200. Examples of the setting information include information such as a resource cycle.

Next, the communication device 300 is connected to the base station 100 and the core network 400 (for example, an MME 410) via the terminal device 200. Specifically, the communication device 300 sets up non-access stratum (NAS) attachment, authentication, and encryption with respect to the base station 100 (S205). As these processes are performed, the communication device 300 completes the connection to the core network 400 (for example, MME 410) (S207).

Then, the base station 100 makes resource control settings for the terminal device 200 and the communication device 300 (S209, S211). Examples of the resource control settings include settings of a resource cycle, a bandwidth, and the like. As above, the initial connection sequence of the communication device 300 connected to the core network via the wired communication path is completed.

Since the communication settings (RRC settings) are made as described above, for example, it is possible to perform QoS control in consideration of the entire series of communication paths. As a specific example, the base station 100 can perform communication management more appropriate as a system by grasping the traffic volume of each of the wireless communication path and the wired communication path and allocating appropriate communication resources to the respective communication devices (for example, the terminal device 200, the communication device 300, and the like) by time division or frequency division. As a result, it is possible to secure the end-to-end latency even in a situation where a plurality of communications having different communication schemes, such as the wired communication path and the wireless communication path, are combined.

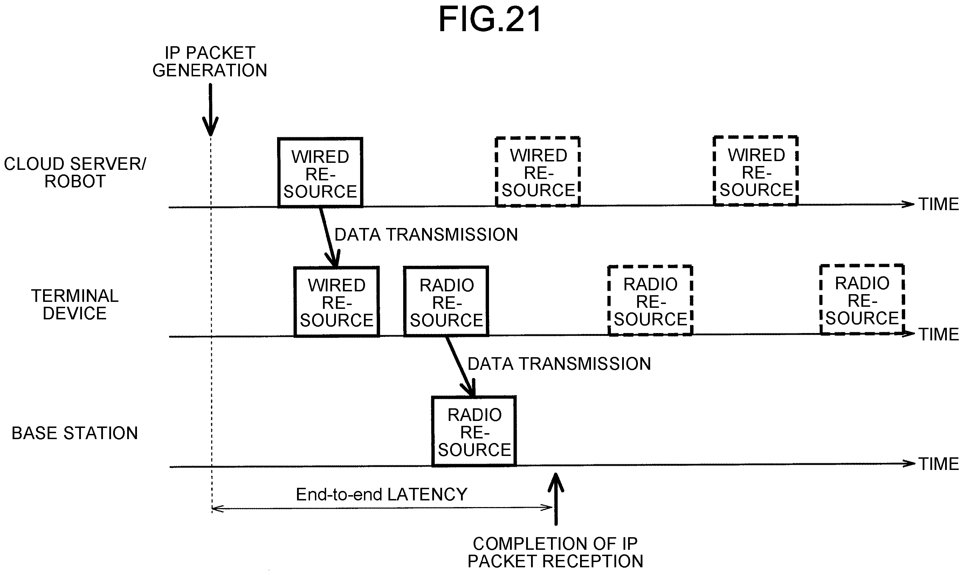

For example, FIG. 21 is an explanatory diagram for describing an outline of an example of the latency in the relay communication according to the embodiment of the present disclosure, and illustrates an example of allocation of transmission and reception resources to each of wired communication and wireless communication. In FIG. 21, the horizontal axis represents time.

With the system according to the present embodiment, it is also possible to set radio resources immediately after data transmission is performed via the wired communication path when data is transmitted from the communication device 300 to the base station 100 via the terminal device 200, for example, as illustrated in FIG. 21. With such control, the terminal device 200 can transfer data, which has been transmitted from the communication device 300 via the wired communication path, to the base station 100 via the wireless communication path while minimizing the latency accompanying the transfer standby (ideally without the transfer standby). That is, the end-to-end latency between the communication device 300 and the base station 100 can be suppressed to be shorter.

### (Control based on Header Information in Packet)

Next, as another method for realizing communication using the above-described data communication (U-Plane) protocol stack, a description will be given regarding an example in which a layer that performs protocol conversion (that is, the layer that performs return) is controlled in a device that relays communication (for example, the terminal device 200) based on header information in a packet.

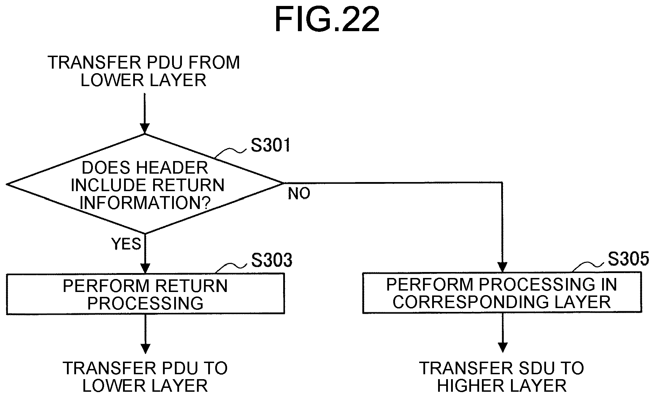

For example, FIG. 22 is a flowchart illustrating an example of processing flow for controlling the layer that performs the protocol conversion (that is, the layer that performs the return) based on the header information. Note that the case where the terminal device 200 that relays the communication between the communication device 300 and the base station 100 performs the above protocol conversion will be described in the present description, but the subject of the processing illustrated in FIG. 22 is not necessarily limited. That is, regarding the processing illustrated in FIG. 22, any device that performs the above-described protocol conversion may be adopted without being limited to the terminal device 200, and, for example, the base station 100 (more specifically, a relay base station or the like) may serve as the subject of the processing.

As illustrated in FIG. 22, when a PDU is transferred from a lower layer in a predetermined layer among a series of protocol stacks, the terminal device 200 analyzes a header corresponding to the layer to recognize information on the return of the layer. Examples of the information on the return of the layer include information on QoS (latency request), information that specifies a layer that performs the return (in other words, the layer that performs protocol conversion), information on the transmission time, and the like. The terminal device 200 switches the subsequent processes based on the information on the return of the layer (S301).

As a specific example, when the header of the packet includes the information indicating the return of the layer (S301, YES), the terminal device 200 performs processing related to the return of the layer (S303). As a specific example, the terminal device 200 performs protocol conversion processing from a predetermined layer in NR to an adaptation layer set so as to correspond to a layer in Ethernet on a PDU based on a reception result from the base station 100, and transfers the converted PDU to a lower layer on the Ethernet side. Further, as another example, the terminal device 200 performs reverse processing of the above processing, that is, the protocol conversion processing from the adaptation layer to the layer in NR on a PDU based on a reception result from the communication device 300, and transfers the PDU after the conversion processing to a layer lower than the layer in NR.

On the other hand, when the header in the packet does not include the information indicating the return of the layer (S301, NO), the terminal device 200 performs processing in the layer (S305) and transfers an SDU to a layer higher than the layer.

Note that the above-described respective methods may be applied in combination. As a specific example, it may be configured such that the top layer where the return is performed from the base station 100 or the core network 400 is set, and then, the terminal device 200 determines any layer below the layer where the return (that is, protocol conversion) is to be performed according to the header information of the packet. With such a configuration, the terminal device 200 can also selectively switch any layer below the above-described top layer where the return is to be performed for each packet based on the header information of the packet.

### (Example When Plurality of Times of Relay Are Performed)

Although the above description has been given mainly focusing on the case where the relay is performed only once, the operational effects achieved by the above-described technology according to the present embodiment can be sufficiently achieved even in an environment where a plurality of times of relay are performed. Therefore, the following description will be given regarding an example of control when a plurality of times of relay are performed while particularly focusing on a layer return process (that is, protocol conversion process) in a communication device that relays communication (for example, the terminal device 200, the relay base station 100, and the like).

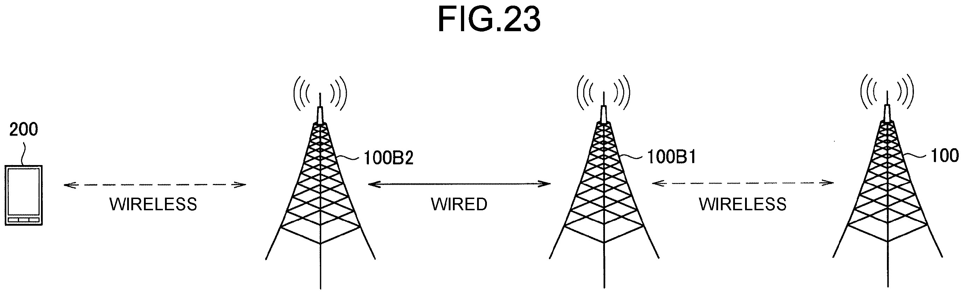

For example, FIG. 23 is an explanatory diagram for describing an example of a schematic configuration when a plurality of times of relay are performed. In the example illustrated in FIG. 23, the communication between the base station 100A and the terminal device 200 is relayed twice via relay base stations 100B1 and 100B2. The relay base stations 100B1 and 100B2 are connected via a wired communication path. Further, a connection via a wireless communication path is formed between the base station 100A and the relay base station 100B1 and between the relay base station 100B2 and the terminal device 200.

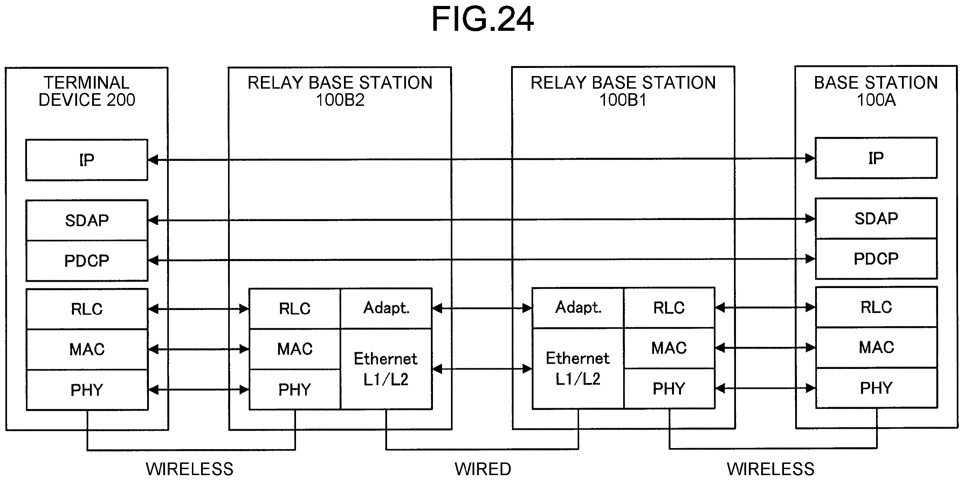

Further, FIG. 24 is an explanatory diagram for describing an example of a data communication protocol stack according to the present embodiment, and illustrates an example of the protocol stack applicable to the system illustrated in FIG. 23. In the example illustrated in FIG. 24, the two relay base stations 100B1 and 100B2 return in an RLC layer (that is, perform protocol conversion in the RLC layer) to transfer data. As a result, it is possible to reduce the latency that is likely to occur due to the processing in the layer higher than the RLC layer, and thus, the effect of reducing a hop delay due to the plurality of times of relay is expected.

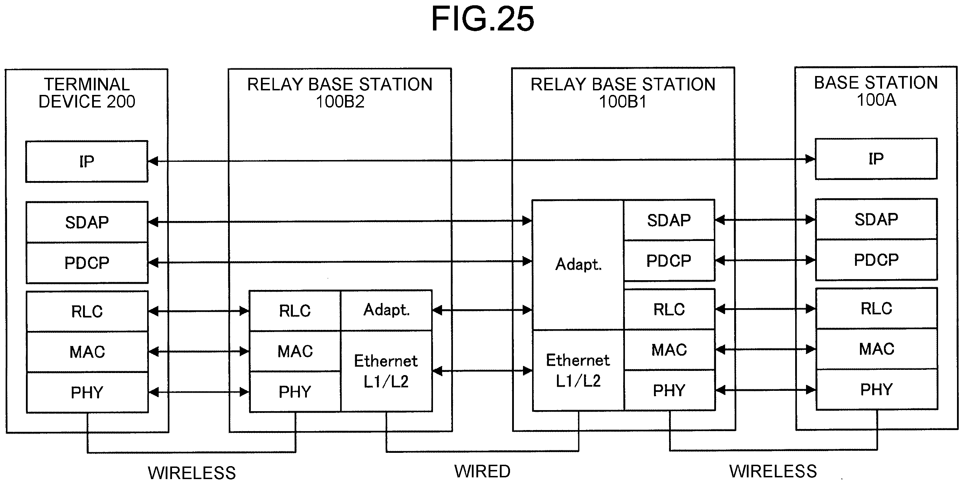

Further, any layer where the return is to be performed may differ depending on a communication path. For example, FIG. 25 is an explanatory diagram for describing another example of the data communication protocol stack according to the present embodiment, and illustrates another example of the protocol stack applicable to the system illustrated in FIG. 23. In the example illustrated in FIG. 25, the relay base station 100B1 returns in an SDAP layer (that is, performs protocol conversion in the SDAP layer) to transfer data. On the other hand, the relay base station 100B2 returns in an RLC layer (that is, performs protocol conversion in the RLC layer) to transfer data. As described above, the layers in which the return is performed differ between the relay base station 100B1 and the relay base station 100B2 in the example illustrated in FIG. 25. Note that any layer where the return (processing according to the protocol conversion) is to be performed may be determined depending on a processing capability of a device that performs transfer (as a specific example, the relay base station, the terminal device, or the like), a state of a communication path between the device and another device, and the like.

### <<4. Application Examples>>

The technology according to the present disclosure can be applied to various products. For example, the base station 100 may be realized as any kind of evolved Node B (eNB) such as a macro eNB and a small eNB. The small eNB may be an eNB that covers a cell smaller than a macro cell, such as a pico eNB, a micro eNB, and a home (femto) eNB. Instead, the base station 100 may be realized as another type of base station such as a NodeB and a base transceiver station (BTS). The base station 100 may include a main entity (also referred to as a base station device) that controls wireless communication and one or more remote radio heads (RRHs) arranged at different locations from the main entity. Further, various types of terminals to be described below may operate as the base station 100 by executing a base station function temporarily or permanently.

Further, for example, the terminal device 200 or 300 may be realized as a mobile terminal such as a smartphone, a tablet personal computer (PC), a notebook PC, a portable game console, a portable or dongle-type mobile router, and a digital camera or an in-vehicle terminal such as a car navigation device. Further, the terminal device 200 or 300 may be realized as a terminal (also referred to as a machine type communication (MTC) terminal) that performs machine to machine (M2M) communication. Further, the terminal device 200 or 300 may be a wireless communication module (for example, an integrated circuit module formed of one base station 100 die) mounted on these terminals.

### <4.1. Application Examples Related to Base Station>

### (First Application Example)

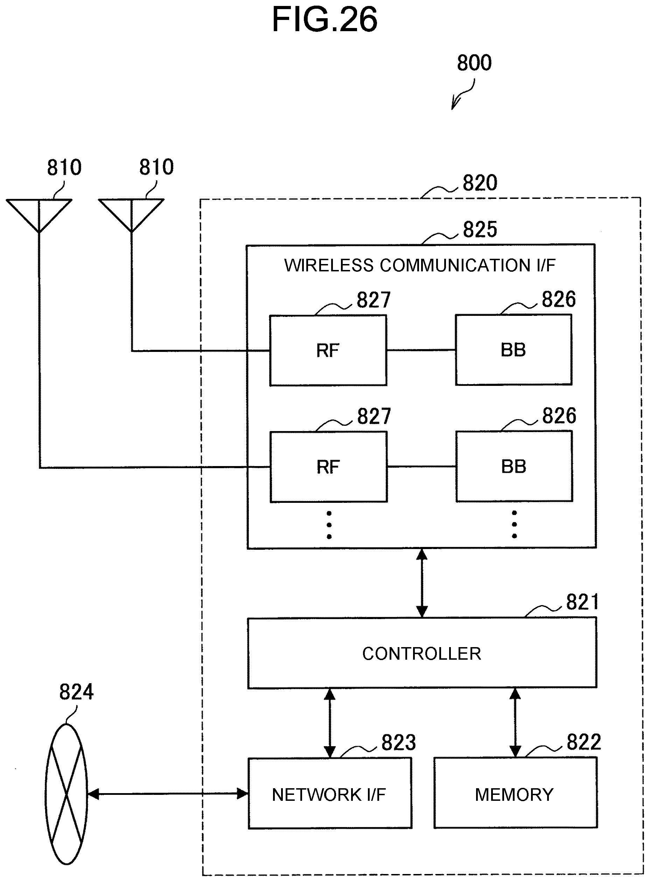

FIG. 26 is a block diagram illustrating a first example of a schematic configuration of an eNB to which the technology according to the present disclosure can be applied. The eNB 800 has one or more antennas 810 and a base station device 820. Each of the antennas 810 and the base station device 820 can be connected to each other via an RF cable.

Each of the antennas 810 has a single or a plurality of antenna elements (for example, a plurality of antenna elements constituting a MIMO antenna), and is used for transmission and reception of a radio signal performed by the base station device 820. The eNB 800 has the plurality of antennas 810 as illustrated in FIG. 26, and the plurality of antennas 810 may respectively correspond to a plurality of frequency bands used by the eNB 800, for example. Note that FIG. 26 illustrates the example in which the eNB 800 has the plurality of antennas 810, but the eNB 800 may have the single antenna 810.

The base station device 820 includes a controller 821, a memory 822, a network interface 823, and a wireless communication interface 825.

The controller 821 may be, for example, a CPU or a DSP and operates various functions of a higher layer of the base station device 820. For example, the controller 821 generates a data packet from data in a signal processed by the wireless communication interface 825, and transfers the generated packet via the network interface 823. The controller 821 may generate a bundled packet by bundling data from a plurality of baseband processors and transfer the generated bundled packet. Further, the controller 821 may have logical functions to execute control such as radio resource control, radio bearer control, mobility management, admission control, and scheduling. Further, the control may be executed in cooperation with a peripheral eNB or core network node. The memory 822 includes a RAM and a ROM and stores a program executed by the controller 821 and various types of control data (for example, a terminal list, transmission power data, scheduling data, and the like).

The network interface 823 is a communication interface configured to connect the base station device 820 to the core network 824. The controller 821 may communicate with the core network node or another eNB via the network interface 823. In such a case, the eNB 800 may be connected to the core network node or the other eNB by a logical interface (for example, S1 interface or X2 interface). The network interface 823 may be a wired communication interface or a wireless communication interface for wireless backhaul. When the network interface 823 is the wireless communication interface, the network interface 823 may use a frequency band, higher than a frequency band used by the wireless communication interface 825, for wireless communication.

The wireless communication interface 825 supports any cellular communication scheme of long term evolution (LTE), LTE-Advanced, and the like, and provides a wireless connection to a terminal located inside a cell of the eNB 800 via the antenna 810. The wireless communication interface 825 may typically include a baseband (BB) processor 826, an RF circuit 827, and the like. The BB processor 826 may perform, for example, encoding/decoding, modulation/demodulation, multiplexing/demultiplexing, and the like, and executes various types of signal processing in each layer (for example, L1, medium access control (MAC), radio link control (RLC), and packet data convergence protocol (PDCP)). The BB processor 826 may have some or all of the above-described logical functions instead of the controller 821. The BB processor 826 may be a module including a memory that stores a communication control program, a processor that executes the program, and a related circuit, and the function of the BB processor 826 may be changed by updating the above program. Further, the module may be a card or a blade inserted into a slot of the base station device 820, or may be a chip mounted on the card or the blade. Meanwhile, the RF circuit 827 may include a mixer, a filter, an amplifier, and the like, and transmits and receives a radio signal via the antenna 810.

The wireless communication interface 825 includes a plurality of the BB processors 826 as illustrated in FIG. 26, and the plurality of BB processors 826 may respectively correspond to a plurality of frequency bands used by, for example, the eNB 800. Further, the wireless communication interface 825 includes a plurality of the RF circuits 827 as illustrated in FIG. 26, and the plurality of RF circuits 827 may respectively correspond to, for example, a plurality of antenna elements. Note that FIG. 26 illustrates the example in which the wireless communication interface 825 includes the plurality of BB processors 826 and the plurality of RF circuits 827, but the wireless communication interface 825 may include the single BB processor 826 or the single RF circuit 827.

In the eNB 800 illustrated in FIG. 26, one or more components (for example, at least any of the communication control unit 151, the information acquisition unit 153, and the notification unit 155) included in the base station 100 described with reference to FIG. 11 may be mounted on the wireless communication interface 825. Alternatively, at least some of these components may be mounted on the controller 821. As an example, the eNB 800 may be equipped with a module that includes some (for example, the BB processor 826) or all of the wireless communication interface 825 and/or the controller 821, and the above one or more components may be mounted on the module. In this case, the module may store a program configured to cause a processor to function as the above one or more components (in other words, the program that causes the processor to execute the operations of the above one or more components) and execute the program. As another example, a program configured to cause a processor to function as the above one or more components may be installed on the eNB 800, and the wireless communication interface 825 (for example, BB processor 826) and/or the controller 821 may execute the program. As described above, the eNB 800, the base station device 820, or the above module may be provided as the device including the above one or more components, or the program configured to cause the processor to function as the above one or more components may be provided. Further, a readable recording medium on which the above program has been recorded may be provided.

Further, in the eNB 800 illustrated in FIG. 26, the wireless communication unit 120 described with reference to FIG. 11 may be mounted on the wireless communication interface 825 (for example, RF circuit 827). Further, the antenna unit 110 may be mounted on the antenna 810. Further, the network communication unit 130 may be mounted on the controller 821 and/or the network interface 823. Further, the storage unit 140 may be mounted on the memory 822.

### (Second Application Example)

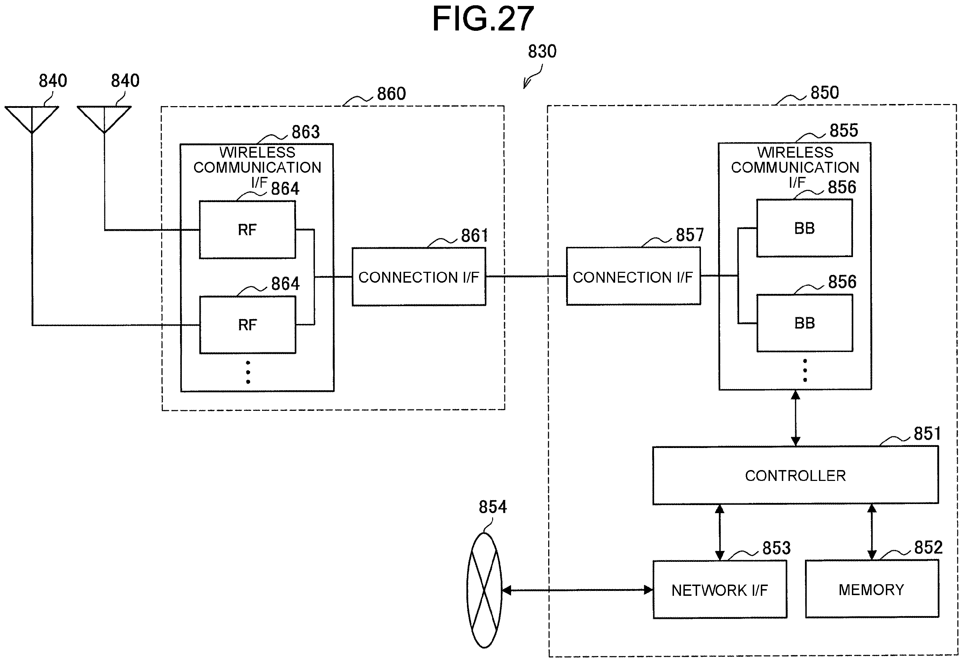

FIG. 27 is a block diagram illustrating a second example of a schematic configuration of an eNB to which the technology according to the present disclosure can be applied. An eNB 830 has one or more antennas 840, a base station device 850, and an RRH 860. Each of the antennas 840 and the RRH 860 can be connected to each other via an RF cable. Further, the base station device 850 and the RRH 860 can be connected to each other by a high-speed line such as an optical fiber cable.

Each of the antennas 840 has a single or a plurality of antenna elements (for example, a plurality of antenna elements constituting a MIMO antenna) and is used for transmission and reception of a radio signal performed by the RRH 860. The eNB 830 has the plurality of antennas 840 as illustrated in FIG. 27, and the plurality of antennas 840 may respectively correspond to a plurality of frequency bands used by the eNB 830, for example. Note that FIG. 27 illustrates the example in which the eNB 830 has the plurality of antennas 840, but the eNB 830 may have the single antenna 840.

The base station device 850 includes a controller 851, a memory 852, a network interface 853, a wireless communication interface 855, and a connection interface 857. The controller 851, the memory 852 and the network interface 853 are similar to the controller 821, the memory 822 and the network interface 823 described with reference to FIG. 26.

The wireless communication interface 855 supports any cellular communication scheme of LTE, LTE-Advanced, and the like, and provides a wireless connection to a terminal located in a sector corresponding to the RRH 860 via the RRH 860 and the antenna 840. The wireless communication interface 855 can typically include a BB processor 856 and the like. The BB processor 856 is similar to the BB processor 826 described with reference to FIG. 26, except for being connected to an RF circuit 864 of the RRH 860 via the connection interface 857. The wireless communication interface 855 includes a plurality of the BB processors 856 as illustrated in FIG. 27, and the plurality of BB processors 856 may respectively correspond to a plurality of frequency bands used by, for example, the eNB 830. Note that FIG. 27 illustrates the example in which the wireless communication interface 855 includes the plurality of BB processors 856, but the wireless communication interface 855 may include the single BB processor 856.

The connection interface 857 is an interface configured to connect the base station device 850 (wireless communication interface 855) to the RRH 860. The connection interface 857 may be a communication module configured for communication on a high-speed line connecting the base station device 850 (wireless communication interface 855) and the RRH 860.

Further, the RRH 860 also includes a connection interface 861 and a wireless communication interface 863.

The connection interface 861 is an interface configured to connect the RRH 860 (wireless communication interface 863) to the base station device 850. The connection interface 861 may be a communication module configured for communication on the high-speed line.

The wireless communication interface 863 transmits and receives a radio signal via the antenna 840. The wireless communication interface 863 can typically include the RF circuit 864 and the like. The RF circuit 864 may include a mixer, a filter, an amplifier, and the like, and transmits and receives a radio signal via the antenna 840. As illustrated in FIG. 27, the wireless communication interface 863 includes a plurality of the RF circuits 864, and the plurality of RF circuits 864 may respectively correspond to, for example, a plurality of antenna elements. Note that FIG. 27 illustrates the example in which the wireless communication interface 863 includes the plurality of RF circuits 864, but the wireless communication interface 863 may include the single RF circuit 864.

In the eNB 830 illustrated in FIG. 27, one or more components (for example, at least any of the communication control unit 151, the information acquisition unit 153, and the notification unit 155) included in the base station 100 described with reference to FIG. 11 may be mounted on the wireless communication interface 855 and/or the wireless communication interface 863. Alternatively, at least some of these components may be mounted on the controller 851. As an example, the eNB 830 may be equipped with a module that includes some (for example, the BB processor 856) or all of the wireless communication interface 855 and/or the controller 851, and the above one or more components may be mounted on the module. In this case, the module may store a program configured to cause a processor to function as the above one or more components (in other words, the program that causes the processor to execute the operations of the above one or more components) and execute the program. As another example, a program configured to cause a processor to function as the above one or more components may be installed on the eNB 830, and the wireless communication interface 855 (for example, BB processor 856) and/or the controller 851 may execute the program. As described above, the eNB 830, the base station device 850, or the above module may be provided as the device including the above one or more components, or the program configured to cause the processor to function as the above one or more components may be provided. Further, a readable recording medium on which the above program has been recorded may be provided.

Further, in the eNB 830 illustrated in FIG. 27, the wireless communication unit 120 described with reference to FIG. 11, for example, may be mounted on the wireless communication interface 863 (for example, RF circuit 864). Further, the antenna unit 110 may be mounted on the antenna 840. Further, the network communication unit 130 may be mounted on the controller 851 and/or the network interface 853. Further, the storage unit 140 may be mounted on the memory 852.

### <4.2. Application Examples Related to Terminal Device>

### (First Application Example)

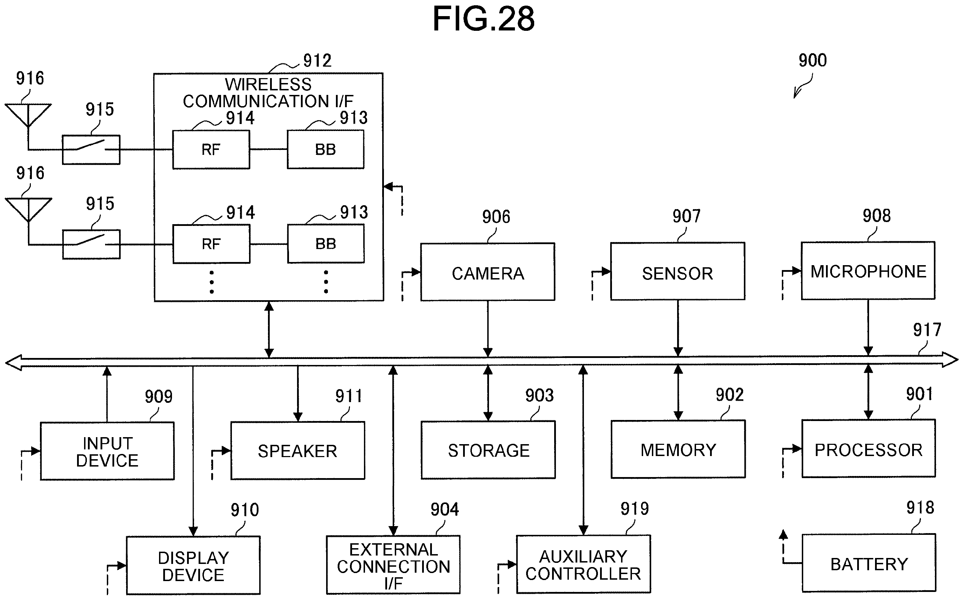

FIG. 28 is a block diagram illustrating an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on chip (SoC), and controls functions of an application layer and other layers of the smartphone 900. The memory 902 includes a RAM and a ROM and stores a program and data executed by the processor 901. The storage 903 can include a storage medium such as a semiconductor memory and a hard disk. The external connection interface 904 is an interface configured to connect an external device such as a memory card and a universal serial bus (USB) device to the smartphone 900.

The camera 906 has an imaging element such as a charge coupled device (CCD) and a complementary metal oxide semiconductor (CMOS), and generates a captured image. The sensor 907 may include, for example, a group of sensors such as a positioning sensor, a gyro sensor, a geomagnetic sensor, and an acceleration sensor. The microphone 908 converts a sound input to the smartphone 900 into a sound signal. The input device 909 includes, for example, a touch sensor, a keypad, a keyboard, a button, a switch, or the like that detects a touch on a screen of the display device 910, and receives an operation or information input from a user. The display device 910 has the screen such as a liquid crystal display (LCD) and an organic light emitting diode (OLED) display, and displays an output image of the smartphone 900. The speaker 911 converts the sound signal output from the smartphone 900 into a sound.

The wireless communication interface 912 supports any cellular communication scheme of LTE, LTE-Advanced, and the like and executes wireless communication. The wireless communication interface 912 can typically include a BB processor 913, an RF circuit 914, and the like. The BB processor 913 may perform, for example, encoding/decoding, modulation/demodulation, multiplexing/demultiplexing, and the like, and executes various types of signal processing for the wireless communication. On the other hand, the RF circuit 914 may include a mixer, a filter, an amplifier, and the like, and transmits and receives a radio signal via the antenna 916. The wireless communication interface 912 may be a one-chip module in which the BB processor 913 and the RF circuit 914 are integrated. The wireless communication interface 912 may include a plurality of the BB processors 913 and a plurality of the RF circuits 914 as illustrated in FIG. 28. Note that FIG. 28 illustrates the example in which the wireless communication interface 912 includes the plurality of BB processors 913 and the plurality of RF circuits 914, but the wireless communication interface 912 may include the single BB processor 913 or the single RF circuit 914.

Further, the wireless communication interface 912 may support other types of wireless communication schemes such as a short-distance radio communication scheme, a near field communication scheme, and a wireless local area network (LAN) scheme, in addition to the cellular communication scheme, and may include the BB processor 913 and the RF circuit 914 for each wireless communication scheme in such a case.

Each of the antenna switches 915 switches a connection destination of the antenna 916 among a plurality of circuits included in the wireless communication interface 912 (for example, circuits for different wireless communication schemes).

Each of the antennas 916 has a single or a plurality of antenna elements (for example, a plurality of antenna elements constituting a MIMO antenna), and is used for transmission and reception of a radio signal performed by the wireless communication interface 912. The smartphone 900 may have a plurality of the antennas 916 as illustrated in FIG. 28. Note that FIG. 28 illustrates the example in which the smartphone 900 has the plurality of antennas 916, but the smartphone 900 may have the single antenna 916.

Further, the smartphone 900 may include the antenna 916 for each wireless communication scheme. In such a case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to each block of the smartphone 900 illustrated in FIG. 28 via a power supply line partially illustrated by the broken line in the drawing. The auxiliary controller 919 operates the minimum necessary functions of the smartphone 900, for example, in a sleep mode.

In the smartphone 900 illustrated in FIG. 28, one or more components (for example, at least any of the communication control unit 241, the information acquisition unit 243, and the notification unit 247) included in the terminal device 200 described with reference to FIG. 12 may be mounted on the wireless communication interface 912. Alternatively, at least some of these components may be mounted on the processor 901 or the auxiliary controller 919. As an example, the smartphone 900 may be equipped with a module that includes some (for example, the BB processor 913) or all of the wireless communication interface 912, the processor 901, and/or the auxiliary controller 919, and the above one or more components may be mounted on the module. In this case, the module may store a program configured to cause a processor to function as the above one or more components (in other words, the program that causes the processor to execute the operations of the above one or more components) and execute the program. As another example, a program configured to cause a processor to function as the above one or more components may be installed on the smartphone 900, and the wireless communication interface 912 (for example, BB processor 913), the processor 901, and/or the auxiliary controller 919 may execute the program. As described above, the smartphone 900 or the above module may be provided as the device including the above one or more components, or the program configured to cause the processor to function as the above one or more components may be provided. Further, a readable recording medium on which the above program has been recorded may be provided.

Further, in the smartphone 900 illustrated in FIG. 28, for example, the wireless communication unit 220 described with reference to FIG. 12 may be mounted on the wireless communication interface 912 (for example, RF circuit 914). Further, the antenna unit 210 may be mounted on the antenna 916. Further, the storage unit 230 may be mounted on the memory 902.

### (Second Application Example)

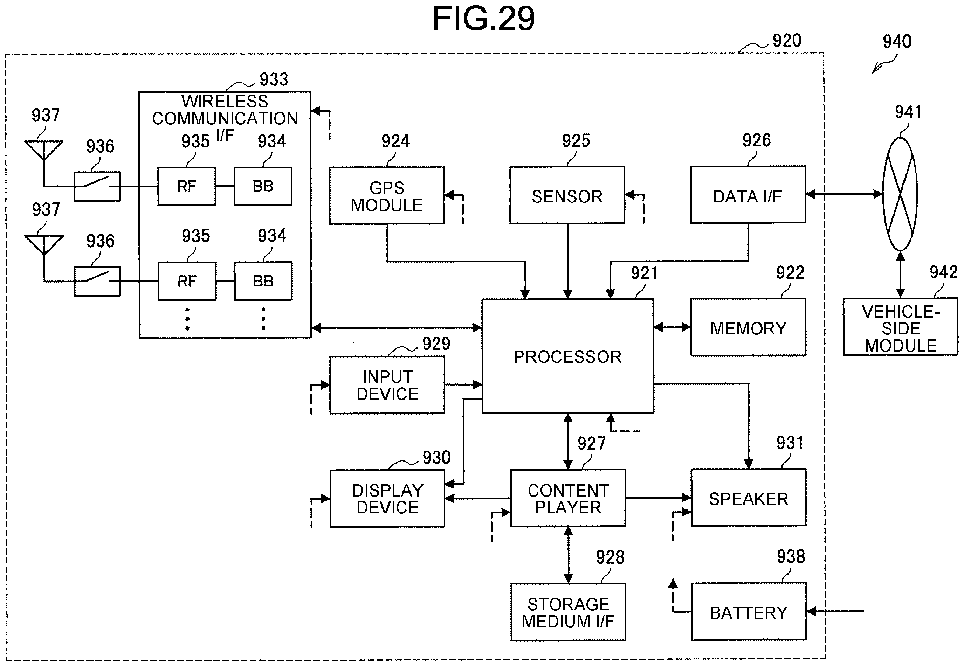

FIG. 29 is a block diagram illustrating an example of a schematic configuration of a car navigation device 920 to which the technology according to the present disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls a navigation function and other functions of the car navigation device 920. The memory 922 includes a RAM and a ROM and stores a program and data executed by the processor 921.

The GPS module 924 uses a GPS signal received from a GPS satellite to measure a position (for example, latitude, longitude, and altitude) of the car navigation device 920. The sensor 925 may include, for example, a group of sensors such as a gyro sensor, a geomagnetic sensor, and a barometric pressure sensor. The data interface 926 is connected to an in-vehicle network 941 via a terminal (not illustrated), for example, and acquires data generated on the vehicle side such as vehicle speed data.

The content player 927 plays a content stored on a storage medium (for example, a CD or a DVD) inserted into the storage medium interface 928. The input device 929 includes, for example, a touch sensor, a button, a switch, or the like that detects a touch on a screen of the display device 930, and receives an operation or information input from a user. The display device 930 has the screen such as an LCD and an OLED display and displays an image of the navigation function or the content to be played. The speaker 931 outputs a sound of the navigation function or the content to be played.

The wireless communication interface 933 supports any cellular communication scheme of LTE, LTE-Advanced, and the like and executes wireless communication. The wireless communication interface 933 can typically include a BB processor 934, an RF circuit 935, and the like. The BB processor 934 may perform, for example, encoding/decoding, modulation/demodulation, multiplexing/demultiplexing, and the like, and executes various types of signal processing for the wireless communication. On the other hand, the RF circuit 935 may include a mixer, a filter, an amplifier, and the like, and transmits and receives a radio signal via the antenna 937. The wireless communication interface 933 may be a one-chip module in which the BB processor 934 and the RF circuit 935 are integrated. The wireless communication interface 933 may include a plurality of the BB processors 934 and a plurality of the RF circuits 935 as illustrated in FIG. 29. Note that FIG. 29 illustrates the example in which the wireless communication interface 933 includes the plurality of BB processors 934 and the plurality of RF circuits 935, but the wireless communication interface 933 may include the single BB processor 934 or the single RF circuit 935.

Further, the wireless communication interface 933 may support other types of wireless communication schemes such as a short-distance radio communication scheme, a near field communication scheme, and a wireless LAN scheme, in addition to the cellular communication scheme, and may include the BB processor 934 and the RF circuit 935 for each wireless communication scheme in such a case.

Each of the antenna switches 936 switches a connection destination of the antenna 937 among a plurality of circuits included in the wireless communication interface 933 (for example, circuits for different wireless communication schemes).

Each of the antennas 937 has a single or a plurality of antenna elements (for example, a plurality of antenna elements constituting a MIMO antenna), and is used for transmission and reception of a radio signal performed by the wireless communication interface 933. The car navigation device 920 may have a plurality of the antennas 937 as illustrated in FIG. 29. Note that FIG. 29 illustrates the example in which the car navigation device 920 has the plurality of antennas 937, but the car navigation device 920 may have the single antenna 937.

Further, the car navigation device 920 may include the antenna 937 for each wireless communication scheme. In such a case, the antenna switch 936 may be omitted from the configuration of the car navigation device 920.

The battery 938 supplies power to each block of the car navigation device 920 illustrated in FIG. 29 via a power supply line partially illustrated by the broken line in the drawing. Further, the battery 938 stores power supplied from the vehicle side.

In the car navigation device 920 illustrated in FIG. 29, one or more components (for example, at least any of the communication control unit 241, the information acquisition unit 243, and the notification unit 247) included in the terminal device 200 described with reference to FIG. 12 and described with reference to FIG. 3 may be mounted on the wireless communication interface 933. Alternatively, at least some of these components may be mounted on the processor 921. As an example, the car navigation device 920 may be equipped with a module that includes some (for example, the BB processor 934) or all of the wireless communication interface 933 and/or the processor 921, and the above one or more components may be mounted on the module. In this case, the module may store a program configured to cause a processor to function as the above one or more components (in other words, the program that causes the processor to execute the operations of the above one or more components) and execute the program. As another example, a program configured to cause a processor to function as the above one or more components may be installed on the car navigation device 920, and the wireless communication interface 933 (for example, BB processor 934) and/or the processor 921 may execute the program. As described above, the car navigation device 920 or the above module may be provided as the device including the above one or more components, or the program configured to cause the processor to function as the above one or more components may be provided. Further, a readable recording medium on which the above program has been recorded may be provided.

Further, in the car navigation device 920 illustrated in FIG. 29, for example, the wireless communication unit 220 described with reference to FIG. 12 may be mounted on the wireless communication interface 933 (for example, RF circuit 935). Further, the antenna unit 210 may be mounted on the antenna 937. Further, the storage unit 230 may be mounted on the memory 922.

Further, the technology according to the present disclosure may be realized as an in-vehicle system (or vehicle) 940 that includes one or more blocks of the above-described car navigation device 920, the in-vehicle network 941, and a vehicle-side module 942. The vehicle-side module 942 generates vehicle-side data such as vehicle speed, engine speed, and failure information, and outputs the generated data to the in-vehicle network 941.

### <<5. Conclusion>>

As described above, in a system according to the embodiment of the present disclosure, a communication device (for example, the terminal device 200) that relays communication between a plurality of communication devices includes a first communication unit, a second communication unit, and a control unit. The first communication unit performs wireless communication based on a first communication scheme. The second communication unit performs communication based on a second communication scheme different from the first communication scheme. The control unit controls the communication based on the first communication scheme and the communication based on the second communication scheme. A second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme. The control unit converts one of data corresponding to the first layer and data corresponding to the second layer to the other.

Further, a communication device (for example, the communication device 300) that communicates with a base station based on relay by another communication device (for example, the terminal device 200) includes a communication unit and a control unit. The communication unit communicates with the other communication device, which relays data transmitted from the base station based on a first communication scheme, based on a second communication scheme different from the first communication scheme. The control unit controls the communication based on the second communication scheme. A second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme. The control unit performs control such that at least any of a process corresponding to a communication protocol of a layer higher than the first layer among processes according to encoding of transmitted data based on the first communication scheme and a process corresponding to a communication protocol of a layer higher than the first layer among processes according to decoding of received data based on the first communication scheme is applied as a process corresponding to a communication protocol of a layer higher than the second layer.

With the above configuration, it is possible to minimize the latency accompanying the transfer standby in the communication device (for example, the terminal device or the relay base station) that relays communication between the plurality of communication devices even in a situation where relay communication in which communications having different communication schemes are combined is applied. Further, the protocol conversion is performed in a lower layer in the protocol stack as compared with the conventional method, and thus, it is possible to reduce the latency accompanying the execution of processing in a layer higher than a layer in which the protocol conversion is performed. As a result, even in the situation where the relay communication in which communications having different communication schemes are combined is applied, it is possible to suppress the end-to-end latency between the plurality of communication devices to be shorter with the system according to the present embodiment. As a result, even in the situation where a plurality of communications with different communication schemes are applied in the communication between the plurality of communication devices, it is possible to secure the end-to-end quality (for example, QoS) between the plurality of communication devices in a more preferable manner with the system according to the embodiment of the present disclosure.

While the preferred embodiments of the present disclosure have been described in detail above with reference to the accompanying drawings, the technical scope of the present disclosure is not limited to such examples. It is apparent that a person who has ordinary knowledge in the technical field of the present disclosure can find various alterations and modifications within the scope of technical ideas described in the claims, and it should be understood that such alterations and modifications will naturally pertain to the technical scope of the present disclosure.

Further, the effects described in the present specification are merely illustrative or exemplary, and are not restrictive. That is, the technology according to the present disclosure can exhibit other effects that are obvious to those skilled in the art from the description in the present specification, in addition to or instead of the above effects.

Note that the following configurations come under the technical scope of the present disclosure.
(1) A communication device comprising:
   a first communication unit that performs wireless communication based on a first communication scheme;
   a second communication unit that performs communication based on a second communication scheme different from the first communication scheme; and
   a control unit that controls the communication based on the first communication scheme and the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   the control unit converts one of data corresponding to the first layer and data corresponding to the second layer to the other.
(2) The communication device according to (1), wherein the second communication scheme is a communication scheme for performing communication via a wired communication path.
(3) The communication device according to (2), wherein the second layer is any layer among a series of layers corresponding to a data link layer and a physical layer.
(4) The communication device according to any one of (1) to (3), wherein the first layer is any layer among a series of layers corresponding to a link layer and a physical layer.
(5) The communication device according to (4), wherein the first layer is a layer lower than an Internet protocol (IP) layer.
(6) The communication device according to any one of (1) to (5), wherein
   the control unit
   converts data corresponding to the first layer based on a reception result of the first communication unit into data corresponding to the second layer, and
   performs processing on the converted data according to a communication protocol of the second communication scheme to generate data to be transmitted to another device via the second communication unit.
(7) The communication device according to any one of (1) to (6), wherein
   the control unit
   converts data corresponding to the second layer based on a reception result of the second communication unit into data corresponding to the first layer, and
   performs processing on the converted data according to a communication protocol of the first communication scheme to generate data to be transmitted to another device via the first communication unit.
(8) The communication device according to any one of (1) to (7), wherein the first layer is set based on control information notified from a base station.
(9) The communication device according to (8), wherein the control information is transmitted separately from data transmitted via the wireless communication based on the first communication scheme.
(10) The communication device according to (8) or (9), wherein the control information is notified based on a communication protocol corresponding to a radio resource control (RRC) layer.
(11) The communication device according to any one of (1) to (10), wherein the first layer is set based on information associated with a header of received data.
(12) The communication device according to any one of (1) to (11) wherein the first layer is set according to a situation of a communication path through which data is transmitted based on the first communication scheme.
(13) The communication device according to (12), wherein the first layer is set to a lower layer as reliability of the communication path through which the data is transmitted based on the first communication scheme is higher.
(14) The communication device according to any one of (1) to (13), wherein the control unit replaces a header corresponding to one layer associated with data, which corresponds to the one layer between the first layer and the second layer, with a header corresponding to the other layer to convert the data corresponding to the one layer to data corresponding to the other layer.
(15) The communication device according to any one of (1) to (14), wherein the control unit controls processing related to authentication with an entity of a core network based on a communication protocol corresponding to a non-access stream (NAS) layer.
(16) A communication method, executed by a computer, comprising:
   performing wireless communication based on a first communication scheme;
   performing communication based on a second communication scheme different from the first communication scheme; and
   controlling the communication based on the first communication scheme and the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   one of data corresponding to the first layer and data corresponding to the second layer is converted to the other.
(17) A program which causes a computer to execute:
   performing wireless communication based on a first communication scheme;
   performing communication based on a second communication scheme different from the first communication scheme; and
   controlling the communication based on the first communication scheme and the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   one of data corresponding to the first layer and data corresponding to the second layer is converted to the other.
(18) A communication system comprising:
   a first communication device;
   a second communication device; and
   a third communication device that relays communication between the first communication device and the second communication device,
   wherein the third communication device includes:
      a first communication unit that performs wireless communication with the first communication device based on a first communication scheme;
      a second communication unit that performs communication with the second communication device based on a second communication scheme different from the first communication scheme; and
      a control unit that controls the communication based on the first communication scheme and the communication based on the second communication scheme,
      a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
      the control unit converts one of data corresponding to the first layer and data corresponding to the second layer to the other.
(19) A communication device comprising:
   a communication unit that performs communication with another communication device, which relays data transmitted from a base station based on a first communication scheme, based on a second communication scheme different from the first communication scheme; and
   a control unit that controls the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   the control unit performs control such that at least any of
   a process corresponding to a communication protocol of a layer higher than the first layer among processes according to encoding of transmitted data based on the first communication scheme and
   a process corresponding to a communication protocol of a layer higher than the first layer among processes according to decoding of received data based on the first communication scheme
   is applied as a process corresponding to a communication protocol of a layer higher than the second layer.
(20) The communication device according to (19), wherein the second layer is set based on control information notified from a base station.
(21) The communication device according to (20), wherein the control information is transmitted separately from data transmitted from the other terminal device based on the second communication scheme.
(22) The communication device according to (20), wherein the control information is notified based on a communication protocol corresponding to an RRC layer.
(23) A communication method, executed by a computer, comprising:
   performing communication with another communication device, which relays data transmitted from a base station based on a first communication scheme, based on a second communication scheme different from the first communication scheme; and
   controlling the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   control is performed such that at least any of
   a process corresponding to a communication protocol of a layer higher than the first layer among processes according to encoding of transmitted data based on the first communication scheme and
   a process corresponding to a communication protocol of a layer higher than the first layer among processes according to decoding of received data based on the first communication scheme
   is applied as a process corresponding to a communication protocol of a layer higher than the second layer.
(24) A program which causes a computer to execute:
   performing communication with another communication device, which relays data transmitted from a base station based on a first communication scheme, based on a second communication scheme different from the first communication scheme; and
   controlling the communication based on the second communication scheme,
   wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
   control is performed such that at least any of
   a process corresponding to a communication protocol of a layer higher than the first layer among processes according to encoding of transmitted data based on the first communication scheme and
   a process corresponding to a communication protocol of a layer higher than the first layer among processes according to decoding of received data based on the first communication scheme
   is applied as a process corresponding to a communication protocol of a layer higher than the second layer.

### Reference Signs List

- 1: SYSTEM
- 100: BASE STATION
- 110: ANTENNA UNIT
- 120: WIRELESS COMMUNICATION UNIT
- 130: NETWORK COMMUNICATION UNIT
- 140: STORAGE UNIT
- 150: CONTROL UNIT
- 151: COMMUNICATION CONTROL UNIT
- 153: INFORMATION ACQUISITION UNIT
- 155: NOTIFICATION UNIT
- 200: TERMINAL DEVICE
- 210: ANTENNA UNIT
- 220: WIRELESS COMMUNICATION UNIT
- 230: STORAGE UNIT
- 240: CONTROL UNIT
- 241: COMMUNICATION CONTROL UNIT
- 243: INFORMATION ACQUISITION UNIT
- 247: NOTIFICATION UNIT
- 250: NETWORK COMMUNICATION UNIT
- 300: COMMUNICATION DEVICE
- 310: NETWORK COMMUNICATION UNIT
- 320: STORAGE UNIT
- 330: CONTROL UNIT
- 331: COMMUNICATION CONTROL UNIT
- 333: INFORMATION ACQUISITION UNIT
- 335: NOTIFICATION UNIT
- 400: CORE NETWORK
- 510: CLOUD SERVER
- 520: CONTROL SERVER
- 530: ROBOT

## Claims

1. A communication device comprising:
a first communication unit that performs wireless communication based on a first communication scheme;
a second communication unit that performs communication based on a second communication scheme different from the first communication scheme; and
a control unit that controls the communication based on the first communication scheme and the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
the control unit converts one of data corresponding to the first layer and data corresponding to the second layer to the other.

2. The communication device according to claim 1, wherein the second communication scheme is a communication scheme for performing communication via a wired communication path.

3. The communication device according to claim 2, wherein the second layer is any layer among a series of layers corresponding to a data link layer and a physical layer.

4. The communication device according to claim 1, wherein the first layer is any layer among a series of layers corresponding to a link layer and a physical layer.

5. The communication device according to claim 4, wherein the first layer is a layer lower than an Internet protocol (IP) layer.

6. The communication device according to claim 1, wherein
the control unit
converts data corresponding to the first layer based on a reception result of the first communication unit into data corresponding to the second layer, and
performs processing on the converted data according to a communication protocol of the second communication scheme to generate data to be transmitted to another device via the second communication unit.

7. The communication device according to claim 1, wherein
the control unit
converts data corresponding to the second layer based on a reception result of the second communication unit into data corresponding to the first layer, and
performs processing on the converted data according to a communication protocol of the first communication scheme to generate data to be transmitted to another device via the first communication unit.

8. The communication device according to claim 1, wherein the first layer is set based on control information notified from a base station.

9. The communication device according to claim 8, wherein the control information is transmitted separately from data transmitted via the wireless communication based on the first communication scheme.

10. The communication device according to claim 8, wherein the control information is notified based on a communication protocol corresponding to a radio resource control (RRC) layer.

11. The communication device according to claim 1, wherein the first layer is set based on information associated with a header of received data.

12. The communication device according to claim 1, wherein the first layer is set according to a situation of a communication path through which data is transmitted based on the first communication scheme.

13. The communication device according to claim 12, wherein the first layer is set to a lower layer as reliability of the communication path through which the data is transmitted based on the first communication scheme is higher.

14. The communication device according to claim 1, wherein the control unit replaces a header corresponding to one layer associated with data, which corresponds to the one layer between the first layer and the second layer, with a header corresponding to the other layer to convert the data corresponding to the one layer to data corresponding to the other layer.

15. The communication device according to claim 1, wherein the control unit controls processing related to authentication with an entity of a core network based on a communication protocol corresponding to a non-access stream (NAS) layer.

16. A communication method, executed by a computer, comprising:
performing wireless communication based on a first communication scheme;
performing communication based on a second communication scheme different from the first communication scheme; and
controlling the communication based on the first communication scheme and the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
one of data corresponding to the first layer and data corresponding to the second layer is converted to the other.

17. A program which causes a computer to execute:
performing wireless communication based on a first communication scheme;
performing communication based on a second communication scheme different from the first communication scheme; and
controlling the communication based on the first communication scheme and the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
one of data corresponding to the first layer and data corresponding to the second layer is converted to the other.

18. A communication system comprising:
a first communication device;
a second communication device; and
a third communication device that relays communication between the first communication device and the second communication device,
wherein the third communication device includes:
a first communication unit that performs wireless communication with the first communication device based on a first communication scheme;
a second communication unit that performs communication with the second communication device based on a second communication scheme different from the first communication scheme; and
a control unit that controls the communication based on the first communication scheme and the communication based on the second communication scheme,
a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
the control unit converts one of data corresponding to the first layer and data corresponding to the second layer to the other.

19. A communication device comprising:
a communication unit that performs communication with another communication device, which relays data transmitted from a base station based on a first communication scheme, based on a second communication scheme different from the first communication scheme; and
a control unit that controls the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
the control unit performs control such that at least any of
a process corresponding to a communication protocol of a layer higher than the first layer among processes according to encoding of transmitted data based on the first communication scheme and
a process corresponding to a communication protocol of a layer higher than the first layer among processes according to decoding of received data based on the first communication scheme
is applied as a process corresponding to a communication protocol of a layer higher than the second layer.

20. The communication device according to claim 19, wherein the second layer is set based on control information notified from a base station.

21. The communication device according to claim 20, wherein the control information is transmitted separately from data transmitted from the other terminal device based on the second communication scheme.

22. The communication device according to claim 20, wherein the control information is notified based on a communication protocol corresponding to an RRC layer.

23. A communication method, executed by a computer, comprising:
performing communication with another communication device, which relays data transmitted from a base station based on a first communication scheme, based on a second communication scheme different from the first communication scheme; and
controlling the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
control is performed such that at least any of
a process corresponding to a communication protocol of a layer higher than the first layer among processes according to encoding of transmitted data based on the first communication scheme and
a process corresponding to a communication protocol of a layer higher than the first layer among processes according to decoding of received data based on the first communication scheme
is applied as a process corresponding to a communication protocol of a layer higher than the second layer.

24. A program which causes a computer to execute:
performing communication with another communication device, which relays data transmitted from a base station based on a first communication scheme, based on a second communication scheme different from the first communication scheme; and
controlling the communication based on the second communication scheme,
wherein a second layer is set for a protocol stack of the second communication scheme as a layer corresponding to a first layer, which is any layer below a layer corresponding to a communication protocol according to selection of a transmission path among a series of layers for each of communication protocols constituting a protocol stack of the first communication scheme, and
control is performed such that at least any of
a process corresponding to a communication protocol of a layer higher than the first layer among processes according to encoding of transmitted data based on the first communication scheme and
a process corresponding to a communication protocol of a layer higher than the first layer among processes according to decoding of received data based on the first communication scheme
is applied as a process corresponding to a communication protocol of a layer higher than the second layer.
